(19) Europäisches Patentamt

European Patent Office

Office européen des brevets

(11) Publication number: **0 255 523 B1**

(12) **EUROPEAN PATENT SPECIFICATION**

(45) Date of publication of patent specification: **03.08.94** (51) Int. Cl.⁵: **G10L 5/00**

(21) Application number: **87900604.7**

(22) Date of filing: **22.12.86**

(86) International application number:
**PCT/US86/02810**

(87) International publication number:
**WO 87/04292 (16.07.87 87/15)**

(54) **METHOD AND APPARATUS FOR SYNTHESIZING SPEECH FROM SPEECH RECOGNITION TEMPLATES.**

(30) Priority: **03.01.86 US 816162**

(43) Date of publication of application:
**10.02.88 Bulletin 88/06**

(45) Publication of the grant of the patent:
**03.08.94 Bulletin 94/31**

(84) Designated Contracting States:
**DE FR GB IT NL SE**

(56) References cited:
**EP-A- 0 041 195**
**EP-A- 0 077 558**
**US-A- 4 277 644**
**US-A- 4 426 733**
**US-A- 4 462 080**

(73) Proprietor: **MOTOROLA, INC.**
**1303 East Algonquin Road**
**Schaumburg, IL 60196(US)**

(72) Inventor: **BORTH, David, Edward**
**825 South Harvard Drive**
**Palatine, IL 60067(US)**
Inventor: **GERSON, Ira, Alan**
**1120 Nottingham Lane**
**Hoffman Estates, IL 60196(US)**
Inventor: **LINDSLEY, Brett, Louis**
**1170 Sterling Avenue**
**Apartment 116**
**Palatine, IL 60067(US)**

(74) Representative: **Hudson, Peter David et al**
**Motorola Ltd.**
**Patent and Licensing Operations - Europe**
**Jays Close**
**Viables Industrial Estate**
**Basingstoke Hampshire RG22 4PD (GB)**

ICASSP'83, PROCEEDINGS, IEEE INTERNATIONAL CONFERENCE ON ACOUSTICS, SPEECH AND SIGNAL PROCESSING, 14th-16th April 1983, Boston, Massachusetts, vol. 3, pages 1328-1331, IEEE, New York, US; G. CHOLLET et al.: "On the generation and use of a segment dictionary for speech coding, synthesis and recognition"

THE BELL SYSTEM TECHNICAL JOURNAL, vol. 59, no. 7, September 1980, pages 1153-1163, American Telephone and Telegraph Co., US; L.R. RABINER et al.: "A voice-controlled, repertory-dialer system"

ICASSP'82, PROCEEDINGS, IEEE INTERNATIONAL CONFERENCE ON ACOUSTICS, SPEECH AND SIGNAL PROCESSING, 3rd-5th May 1982, Paris, vol. 2, pages 1262-1265, IEEE, New York, US; R.W. BROWN: "Segmentation for data reduction in isolated word recognition"

## Description

Background of the Invention

The present invention relates generally to speech recognition control systems, and more particularly to a speech communications device employing speech synthesis to identify words stored in a speech recognition template.

User interactive control systems which are responsive to human voice are disclosed in a number of U.S. patents. U.S. patent no. 4,520,576 by Vander Molen discloses a conversational voice command control system for a home appliance such as a clothes dryer. The control system recognizes voice commands and emits synthesized speech sounds, in an interaction with the user, to obtain the information necessary for setting the operating parameters. Speech recognition and speech synthesis have also been applied to radio transceiver control functions (on/off, transmit/receive, volume and squelch control, etc.) in U.S. patent no. 4,426,733 by Brenig. In these vocabulary-dependent speech recognition systems, the controlled device is limited to recognition of a predetermined number of prestored verbal commands. Similarly, the synthesized response to the user is limited to the prestored, or "canned" messages stored in the synthesizer memory. However this type of speech recognition/speech synthesis control system does not provide adequate flexibility for the control of a more sophisticated electronic device, such as a radiotelephone.

A much more sophisticated speech recognition system is described in a paper entitled "DP-100 Connected Speech Recognition System" by Tsuruta, Sakoe and Chiba presented during the International Telecommunication Exposition held in Dallas, Texas, February 26 - March 2, 1979. Their DP-100 system has two operational modes --training and recognition. In the training mode, the user speaks each vocabulary command word once (or twice for digits), and each of the training words is analyzed and stored into reference pattern memory (word templates). In the recognition mode, unknown input speech is analyzed in a manner analogous to the training procedure, and transferred to the dynamic programming processor where it is compared to the reference template. When the recognition processor determines that word match has occurred, the recognition result is transferred to a controlling processor. Hence, the user builds his own command word vocabulary for speech recognition during the training mode. This technique significantly increases the flexibility of the speech recognition control system, since it is no longer vocabulary-dependent.

The above technique of utilizing a vocabulary-independent speech recognition control system is incorporated into a voice-controlled dialing circuit in U.S. Patent 4,348,550 by Pirz et al. In the training mode, a voice response circuit is used to verbally direct the user to utter the words for which templates are required. These template words may include a set of commands (e.g. "off-hook", "directory", etc.), repertory names for the automatic dialer (e.g., "Smith", "Jones", etc.), and phone number digits (0-9). In the speech recognizing mode, acoustic features from a restricted group of word templates are sequentially compared to the acoustic features of the input utterance from the microphone. Upon recognition, a coded identification signal is generated which identifies the input utterance as the closest corresponding template. Thus, a vocabulary-independent speech recognizer significantly increases the flexibility and features of the control system. Other examples are "A Voice-Controlled Repertory - Dialer system" by L R Rabiner et al in The Bell System Technical Journal, Vol. 59 No. 7, Sept. 1980, page 1153-1163; and "On the Generation and Use of a Segment Dictionary for Speech Coding, Synthesis and Recognition" by G Chollet et al ICASSP83, Boston. EP patent application no. EP-A-0077558 discloses a method and apparatus for speech recognition and reproduction using one set of previously stored voiceprints for speech recognition and a second different set of previously stored voiceprints for speech reproduction.

However, the known prior art references fail to offer a viable solution which effectively addresses the problem of identifying which input utterance is associated with a particular word template in a vocabulary-independent speech recognition system. Without this feature, the user has no way of knowing whether the speech recognition system is trained to recognize a particular word. In the present application of a hands-free vehicular radiotelephone control and dialing system, this limitation presents a significant obstacle to increasing the storage and flexibility requirements of a multi-user system.

Various approaches may be taken to solve this problem of identifying the words associated with a speech recognition template. First of all, a separate reply memory, or ROM (read only memory), may be used in parallel with the template memory to identify a particular template memory location with a "canned" synthesized response word (e.g., "first name", "second name", etc.). This "parallel-ROM" approach clearly makes no attempt to identify the actual words stored in the template memory. A second possible approach utilizes a separate read/write memory, or RAM (random access memory), to store each individual spoken name as it is uttered by the user. The spoken name RAM is then used to synthesize a verbal name response corresponding to a particular speech recognition template location. This approach has the inherent disadvantage that significantly more than twice the amount of RAM is required, since a considerable amount of read/write memory is required to store the high quality (high data rate) user-spoken speech associated with each template. Hence, this "parallel-RAM" approach also fails to present a workable, cost-effective solution.

Therefore, a need exists to provide an improved method for identifying which word is associated with each template of a vocabulary-independent speech recognition control system.

Summary of the Invention

Accordingly, it is the general object of the present invention to provide identification of word representations associated with each word template of a speech recognition control system.

A more particular object of the present invention is to provide a method and apparatus for synthesizing speech from speech recognition templates.

Another object of the present invention is to reduce the storage requirements and increase the flexibility of a speech communications device employing a speech recognition/speech synthesis control system.

In accordance with the present invention, there is provided an electronic device having an user-interactive control system for controlling device operating parameters as claimed in claim 1, and a method of providing user-interactive control of electronic device operating parameters as claimed in Claim 9 by means of user-spoken command words.

In an embodiment illustrative of the present invention, a radio transceiver is provided having a transmitter, a receiver, and a hands-free user control means for controlling a plurality of user-controlled radio transceiver operating parameters upon a user-spoken command word, and for providing audible feedback to the user as to the radio transceiver operating status. The control means comprises: a first coupling means for providing hands-free acoustic coupling of user-spoken input speech to the control means, thereby producing an input speech signal; a means for extracting acoustic features from the input speech signal, thereby producing word feature signals; a means for storing particular feature signals as word recognition templates; a means responsive to the word recognition template and the word feature signals for recognizing a plurality of predetermined user-spoken command words to provide voice command data, the plurality of predetermined command words corresponding to the plurality of radio transceiver operating parameters; a means responsive to the voice command data for controlling the radio transceiver operating parameters, and for producing radio status data indicative of the present operating status of the radio transceiver; a means responsive to the radio status data for synthesizing a speech reply signal from the word recognition template; and a second coupling means for providing hands-free acoustic coupling of the speech reply signal from the control means to the user, thereby providing audible feedback to the user as to the radio transceiver present operating status.

Thus, an advantage of the present invention is that it can provide an improved hands-free vehicular radiotelephone control and dialing system by synthesizing speech from speech recognition templates.

Brief Description of the Drawings

Additional objects, features, and advantages in accordance with the present invention will be more clearly understood by reference to the following description taken in connection with the accompanying drawings, in the several figures of which like reference numerals identify like elements, and in which:

Figure 1 is a general block diagram illustrating the technique of synthesizing speech from speech recognition templates according to the present invention;

Figure 2 is a block diagram of a speech communications device having a user-interactive control system employing speech recognition and speech synthesis in accordance with the present invention;

Figure 3 is a detailed block diagram of the preferred embodiment of the present invention illustrating a radio transceiver having a hands-free speech recognition/speech synthesis control system;

Figure 4a is a flowchart showing the sequence of steps performed by the energy normalization block 410 of Figure 4a;

Figure 4b is a flowchart showing the sequence of steps performed by the energy normalization block 410 of Figure 4a;

Figure 4c is a detailed block diagram of the particular hardware configuration of the segmentation/compression block 420 of Figure 4a;

Figure 5a is a graphical representation of a spoken word segemented into frames for forming a cluster according to the present invention;

4

Figure 5b is a diagram exemplifying output clusters being formed for a particular word template, according to the present invention;

Figure 5c is a table showing the possible formations of an arbitrary partial cluster path according to the present invention;

Figures 5d and 5e show a flowchart illustrating a basic implementation of the data reduction process performed by the segmentation/compression block 420 of Figure 4a;

Figure 5f is a detailed flowchart of the traceback and output clusters block 582 of Figure 5e, showing the formation of a data reduced word template from previously determined clusters;

Figure 5g is a traceback pointer table illustrating a clustering path for 24 frames, according to the present invention, applicable to partial traceback;

Figure 5h is a graphical representation of the traceback pointer table of Figure 5g illustrated in the form of a frame connection tree;

Figure 5i is a graphical representation of Figure 5h showing the frame connection tree after three clusters have been output by tracing back to common frames in the tree;

Figures 6a and 6b comprise a flowchart showing the sequence of steps performed by the differential encoding block 430 of Figure 4a;

Figure 6c is a generalized memory map showing the particular data format of one frame of the template memory 160 of Figure 3;

Figure 7a is a graphical representative of frames clustered into average frames, each average frame represented by a state in a word model, in accordance with the present invention;

Figure 7b is a detailed block diagram of the recognition processor 120 of Figure 3, illustrating its relationship with the template memory 160;

Figure 7c is a flowchart illustrating one embodiment of the sequence of steps required for word decoding according to the present invention;

Figures 7d and 7e comprise a flowchart illustrating one embodiment of the steps required for state decoding according to the present invention;

Figure 8a is a detailed block diagram of the data expander block 346 of Figure 3;

Figure 8b is a flowchart showing the sequence of steps performed by the differential decoding block 802 of Figure 8a;

Figure 8c is a flowchart showing the sequence of steps performed by the energy denormalization block 804 of Figure 8a;

Figure 8d is a flowchart showing the sequence of steps performed by the frame repeating block 806 of Figure 8a;

Figure 9a is a detailed block diagram of the channel bank speech synthesizer 340 of Figure 3;

Figure 9b is an alternate embodiment of the modulator/bandpass filter configuration 980 of Figure 9a;

Figure 9c is a detailed block diagram of the preferred embodiment of the pitch pulse source 920 of Figure 9a;

Figure 9d is a graphic representation illustrating various waveforms of Figures 9a and 9c.

## Description of the Preferred Embodiment

### 1. System Configuration

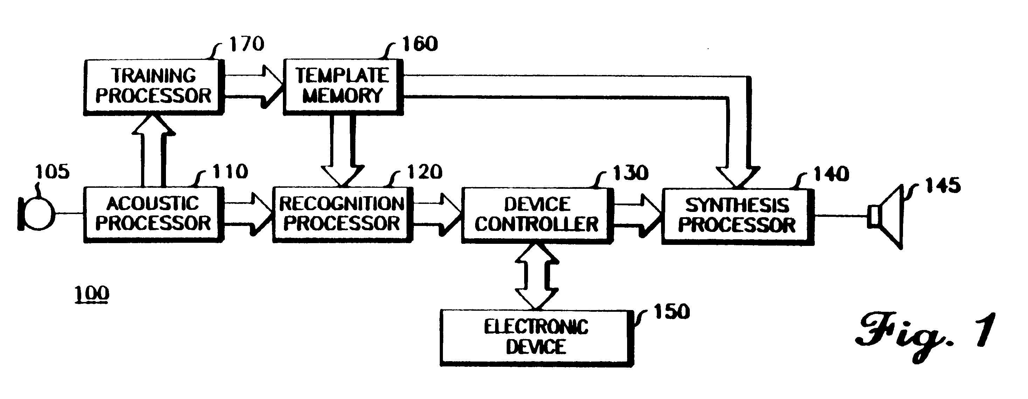

Referring now to the accompanying drawings, Figure 1 shows a general block diagram of user-interactive control system 100 of the present invention. Electronic device 150 may include any electronic apparatus that is sophisticated enough to warrant the incorporation of a speech recognition/speech synthesis control system. In the preferred embodiment, electronic device 150 represents a speech communications device such as a mobile radiotelephone.

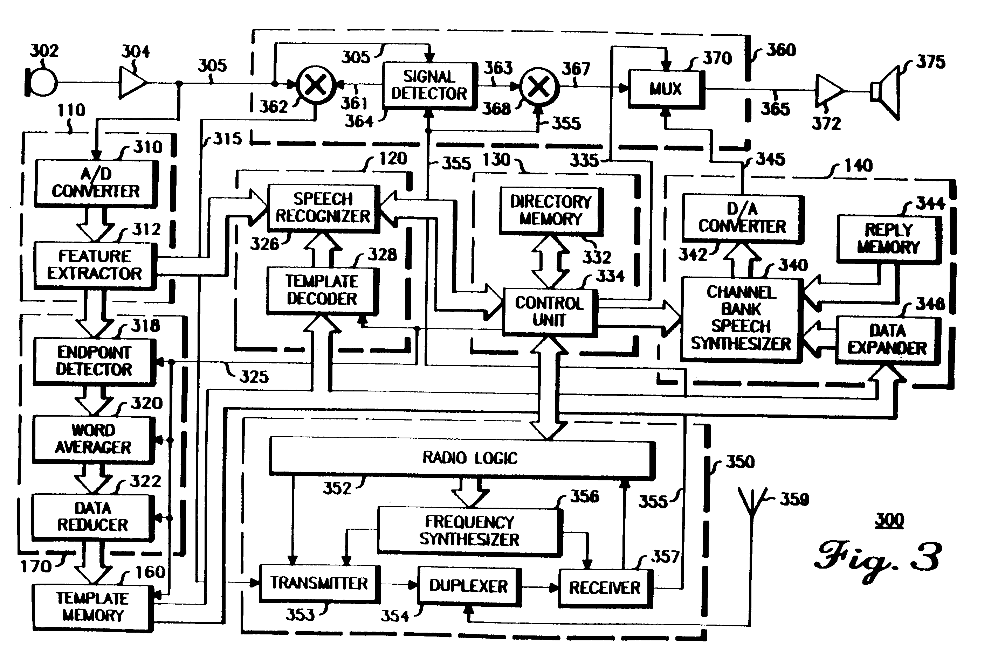

User-spoken input speech is applied to microphone 105, which acts as an acoustic coupler providing an electrical input speech signal for the control system. Acoustic processor 110 performs acoustic feature extraction upon the input speech signal. Word features, defined as the amplitude/frequency parameters of each user-spoken input word, are thereby provided to speech recognition processor 120 and to training processor 170. Acoustic processor 110 may also include a signal conditioner, such as an analog-to-digital converter, to interface the input speech signal to the speech recognition control system. Acoustic processor 110 will be further described in conjunction with Figure 3.

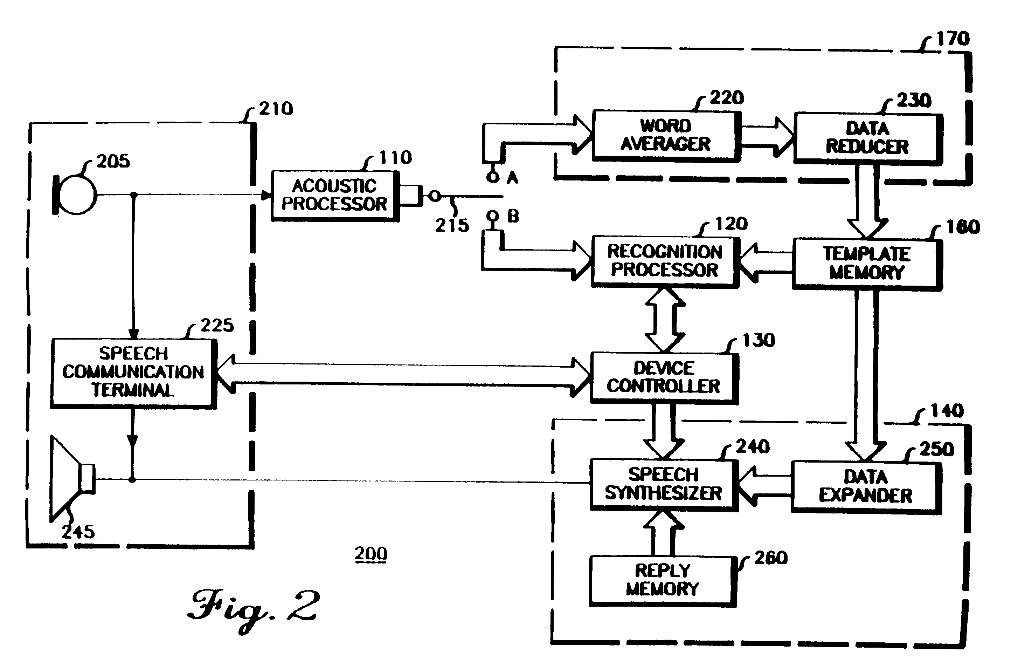

Training processor 170 manipulates this word feature information from acoustic processor 110 to provide word recognition templates to be stored in template memory 160. During the training procedure, the incoming word features are arranged into individual words by locating their endpoints. If the training

5

procedure is designed to accommodate multiple training utterances for word feature consistency, then the multiple utterances may be averaged to form a single word template. Furthermore, since most speech recognition systems do not require all of the speech information to be stored as a template, some type of data reduction is often performed by training processor 170 to reduce the template memory requirements. The word templates are stored in template memory 160 for use by speech recognition processor 120 as well as by speech synthesis processor 140. The exact training procedure utilized by the preferred embodiment of the present invention may be found in the description accompanying Figure 2.

In the recognition mode, speech recognition processor 120 compares the word feature information provided by acoustic processor 110 to the word recognition templates provided by template memory 160. If the acoustic features of the present word feature information derived from the user-spoken input speech sufficiently match the acoustic features of a particular prestored word template derived from the template memory, then recognition processor 120 provides device control data to device controller 130 indicative of the particular word recognized. A further discussion of an appropriate speech recognition apparatus, and how the preferred embodiment incorporates data reduction into the training process may be found in the description accompanying Figures 3 through 5.

Device controller 130 interfaces the entire control system to electronic device 150. Device controller 130 translates the device control data provided by recognition processor 120 into control signals adaptable for use by the particular electronic device. These control signals direct the device to perform specific operating functions as instructed by the user. (Device controller 130 may also perform additional supervisory functions related to other elements shown in Figure 1.) An example of a device controller known in the art and suitable for use with the present invention is a microcomputer. Refer to Figure 3 for further details of the hardware implementation.

Device controller 130 also provides device status data representing the operating status of electronic device 150. This data is applied to speech synthesis processor 140, along with word recognition templates from template memory 160. Synthesis processor 140 utilizes the status data to determine which word recognition template is to be synthesized into user-recognizable reply speech. Synthesis processor 140 may also include an internal reply memory, also controlled by the status data, to provide "canned" reply words to the user. In either case, the user is informed of the electronic device operating status when the speech reply signal is output via speaker 145.

Thus, Figure 1 illustrates how the present invention provides a user-interactive control system utilizing speech recognition to control the operating parameters of an electronic device, and how a speech recognition template may be utilized to generate reply speech to the user indicative of the operating status of the device.

Figure 2 illustrates in more detail the application of the user-interactive control system to a speech communications device comprising a part of any radio or landline voice communications system, such as, for example, a two-way radio system, a telephone system, an intercom system, etc. Acoustic processor 110, recognition processor 120, template memory 160, and device controller 130 are the same in structure and in operation as the corresponding blocks of Figure 1.

However, control system 200 illustrates the internal structure of speech communications device 210. Speech communication terminal 225 represents the main electronic network of device 210, such as, for example, a telephone terminal or a communications console. In this embodiment, microphone 205 and speaker 245 are incorporated into the speech communications device itself. A typical example of this microphone/speaker arrangement would be a telephone handset. Speech communications terminal 225 interfaces operating status information of the speech communications device to device controller 130. This operating status information may comprise functional status data of the terminal itself (e.g., channel data, service information, operating mode messages, etc.), user-feedback information of the speech recognition control system (e.g., directory contents, word recognition verification, operating mode status, etc.), or may include system status data pertaining to the communications link (e.g., loss-of-line, system busy, invalid access code, etc.).

In either the training mode or the recognition mode, the features of user spoken input speech are extracted by acoustic processor 110. In the training mode, which is represented in Figure 2 by position "A" of switch 215, the word feature information is applied to word averager 220 of training processor 170. As previously mentioned, if the system is designed to average multiple utterances together to form a single word template, the averaging is performed by word averager 220. Through the use of word averaging, the training processor can take into account the minor variances between two or more utterances of the same word, thereby producing a more reliable word template. Numerous word averaging techniques may be used. For example, one method would be to combine only the similar word features of all training utterances to produce a "best" set of features for the word template. Another technique may be to simply compare all training utterances to determine which one provides the "best" template. Still another word averaging technique is described by L.R. Rabiner and J.G. Wilpon in "A Simplified Robust Training Procedure for Speaker Trained, Isolated Word Recognition Systems", Journal of the Acoustic Society of America, vol. 68 (November 1980), pp. 1271-76.

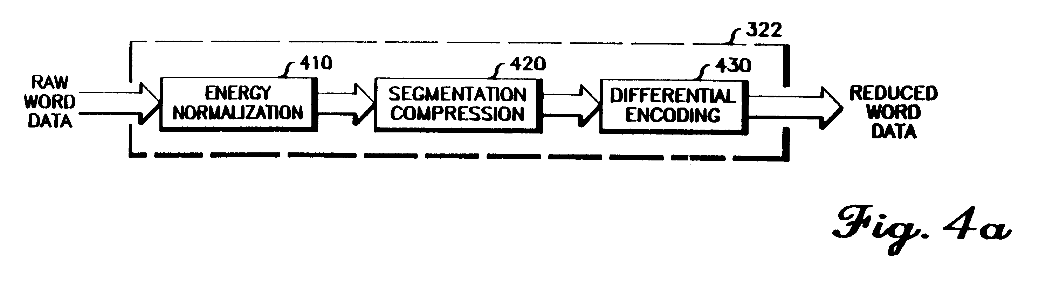

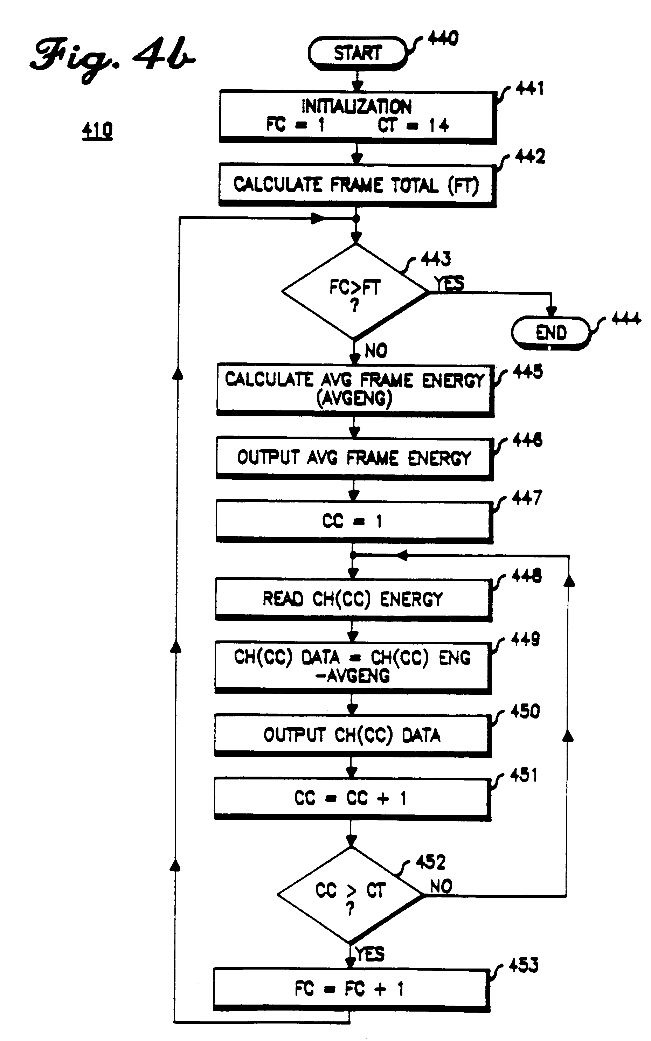

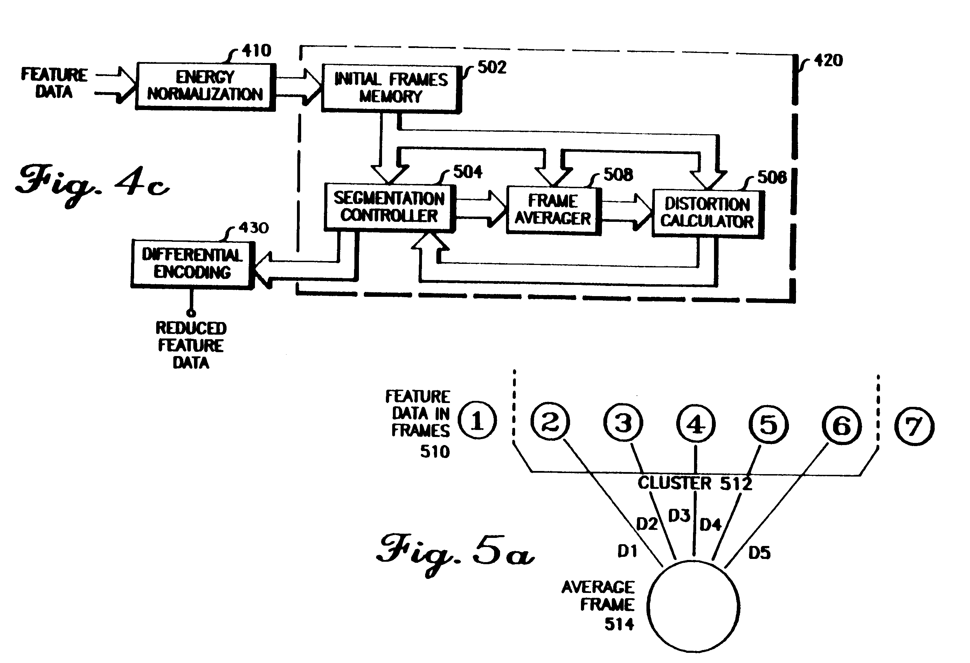

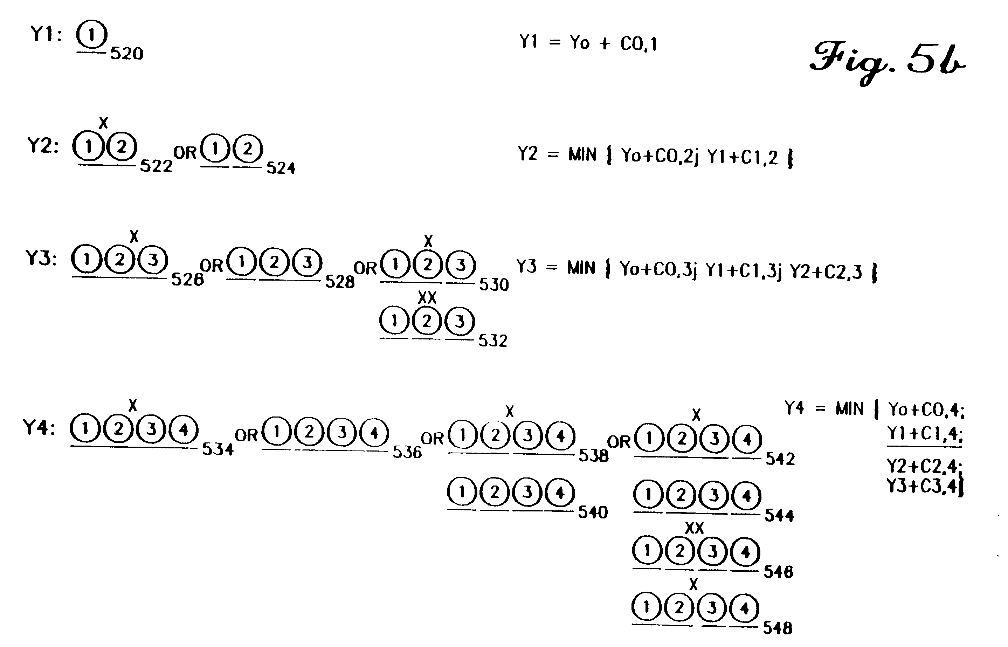

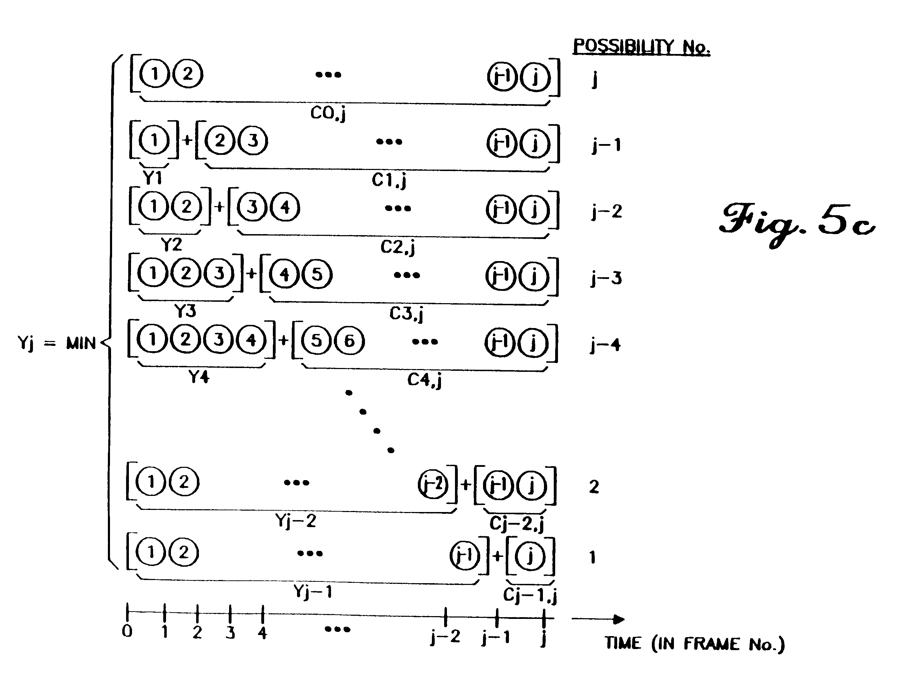

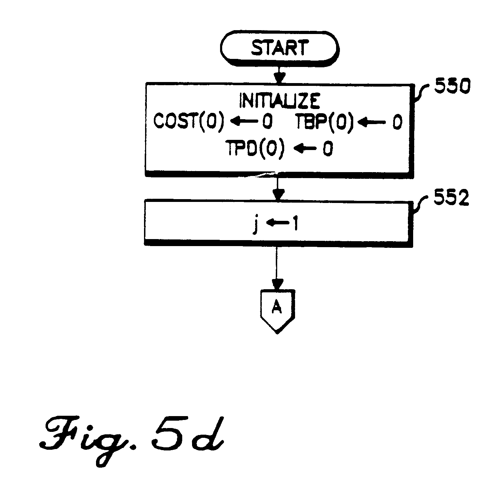

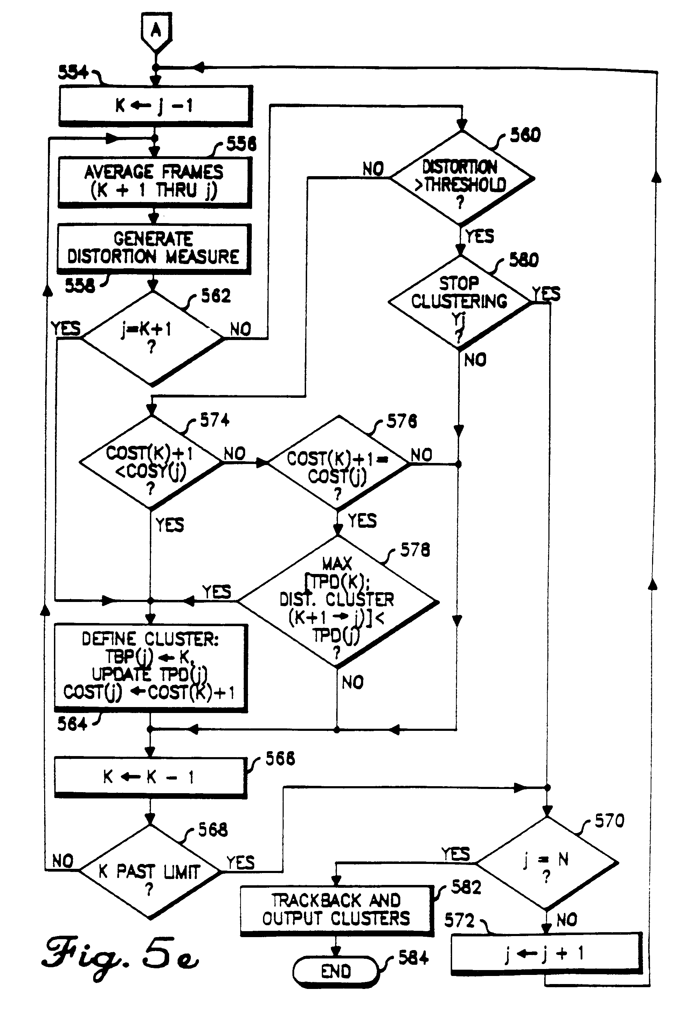

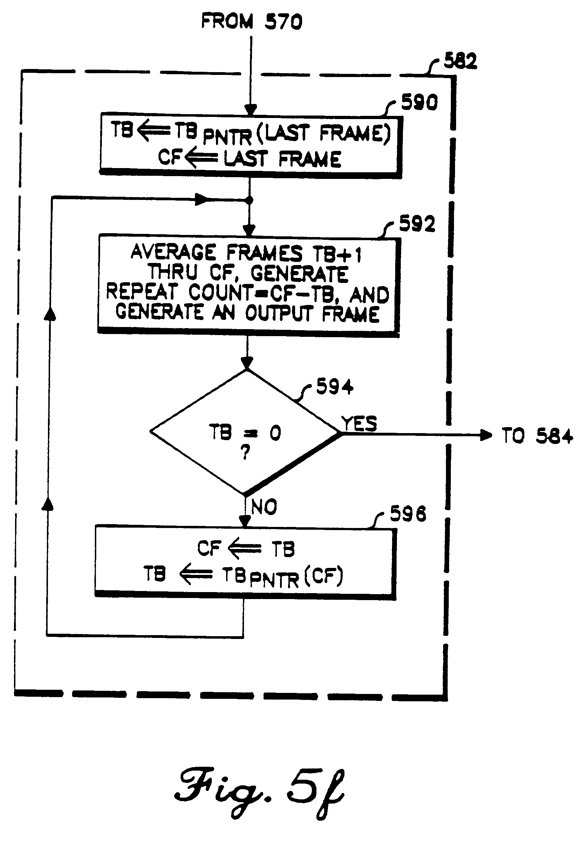

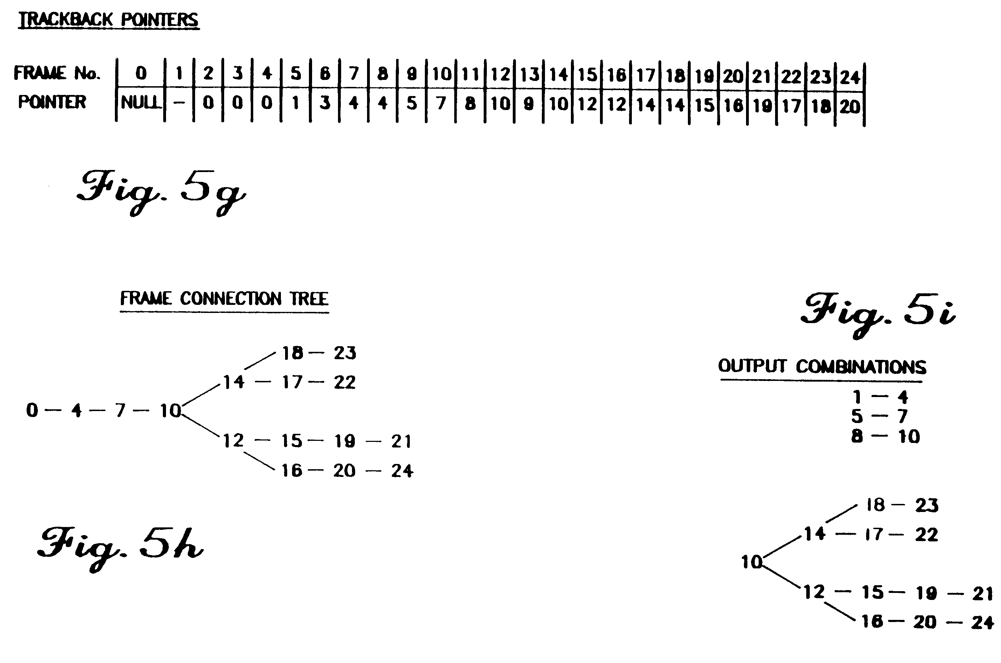

Data reducer 230 then performs data reduction upon either the averaged word data from word averager 220 or upon the word feature signals directly from acoustic processor 110, depending upon the presence or absence of a word averager. In either case, the reduction process consists of segmenting this "raw" word feature, data and combining the data in each segment. The stoage requirements for the template are then further reduced by differential encoding of the segmented data to produce "reduced" word feature data. This specific data reduction technique of the present invention is fully described in conjunction with Figures 4 and 5. To summarize, data reducer 230 compresses the raw word data to minimize the template storage requirements and to reduce the speech recognition computation time.

The reduced word feature data provided by training processor 170 is stored as word recognition templates in template memory 160. In the recognition mode, which is illustrated by position "B" of switch 215, recognition processor 120 compares the incoming word feature signals to the word recognition templates. Upon recognition of a valid command word, recognition processor 120 may instruct device controller 130 to cause a corresponding speech communications device control function to be executed by speech communications terminal 225. Terminal 225 may respond to device controller 130 by sending operating status information back to controller 130 in the form of terminal status data. This data can be used by the control system to synthesize the appropriate speech reply signal to inform the user of the present device operating status. This sequence of events will be more clearly understood by referring to the subsequent example.

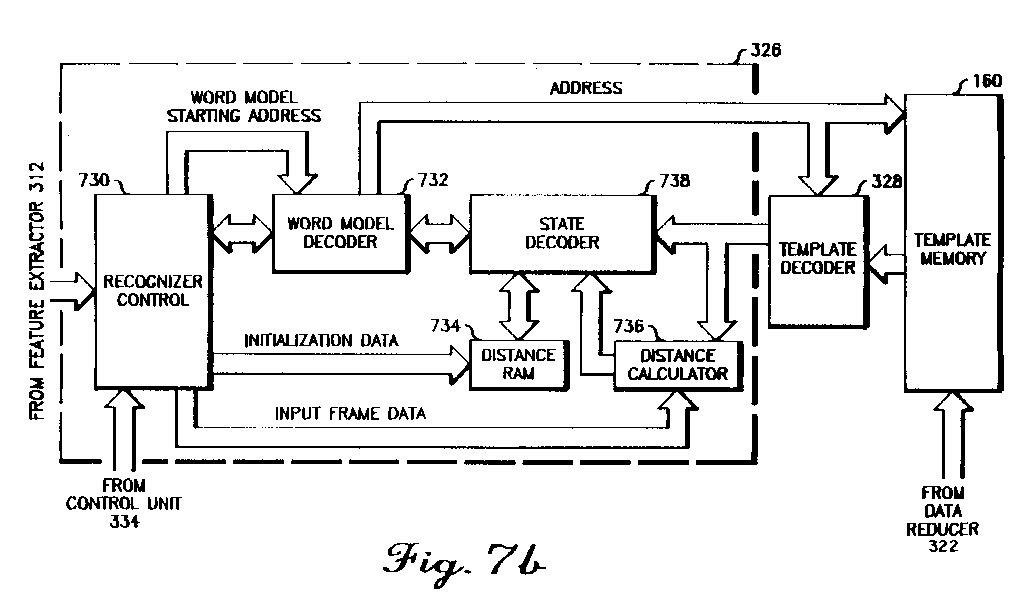

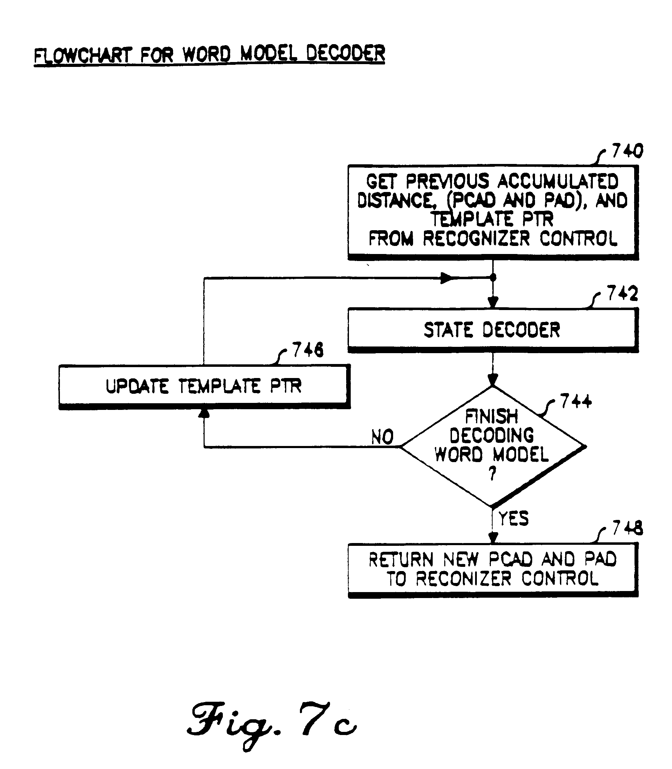

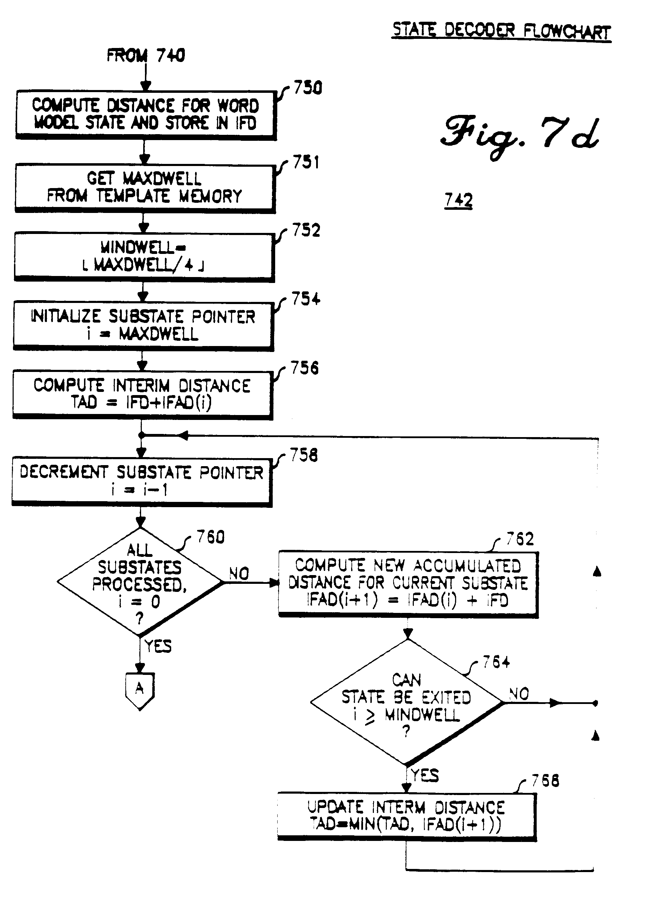

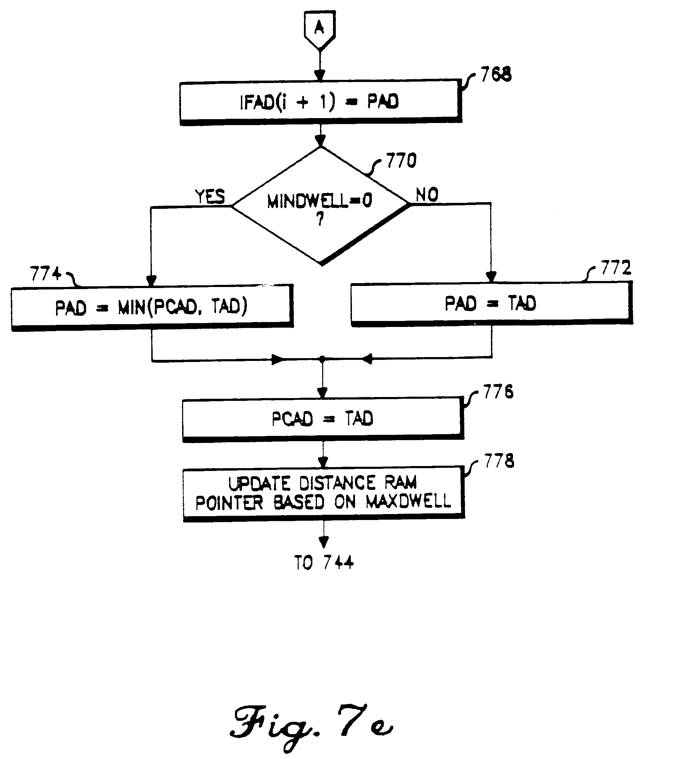

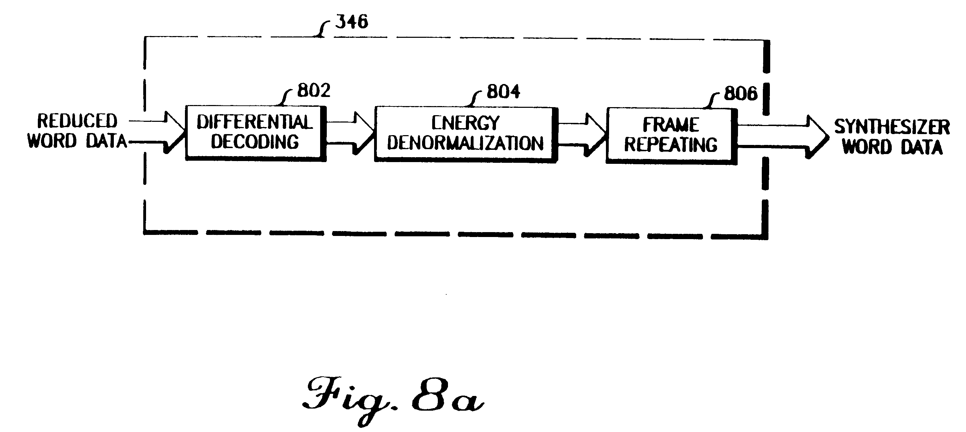

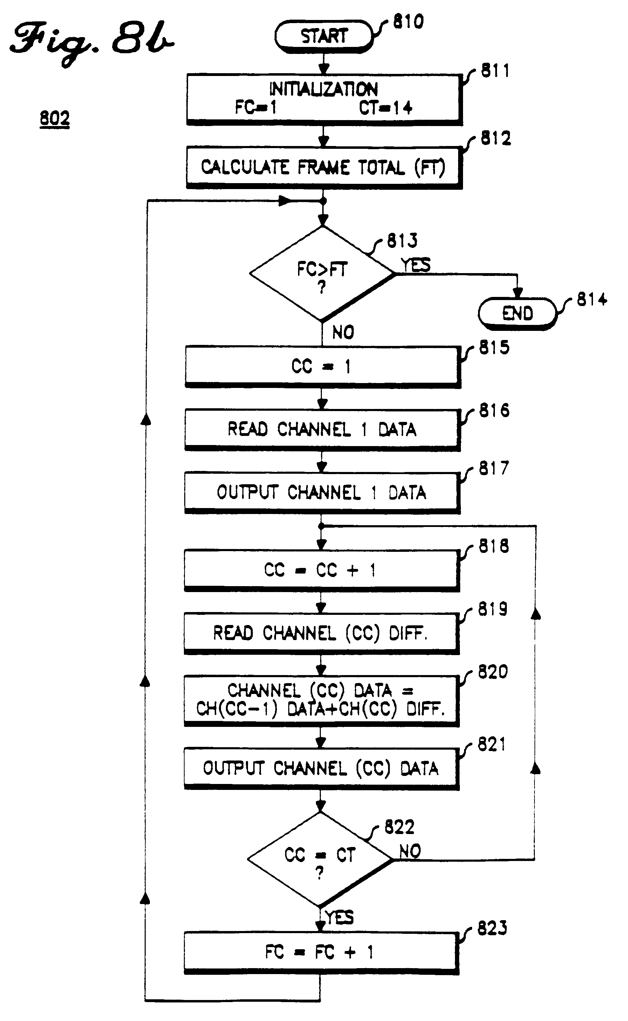

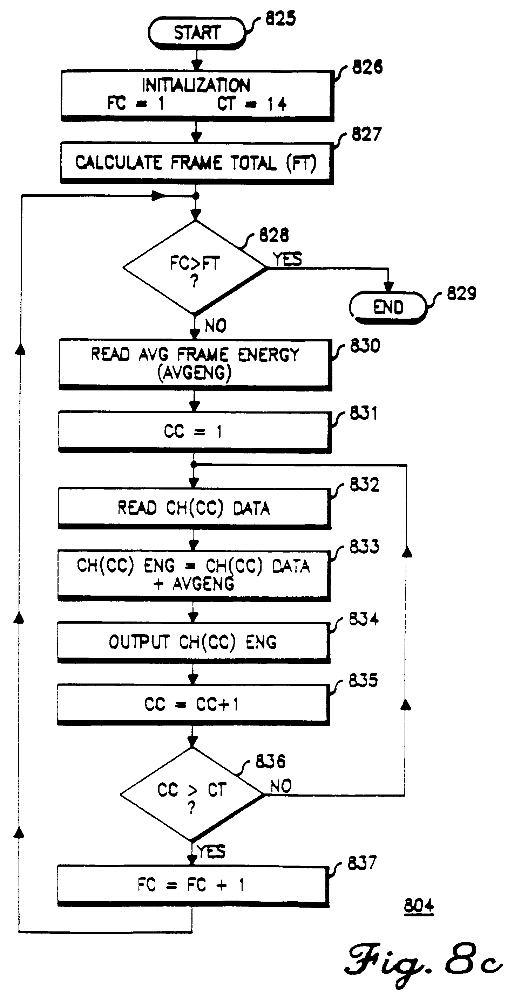

Synthesis processor 140 is comprised of speech synthesizer 240, data expander 250, and reply memory 260. A synthesis processor of this configuration is capable of generating "canned" replies to the user from a prestored vocabulary (stored in reply memory 260), as well as generating "template" responses from a user-generated vocabulary (stored in template memory 160). Speech synthesizer 240 and reply memory 260 are further described in conjunction with Figure 3, and data expander 250 is fully described in the text accompanying Figure 8a. In combination, the blocks of synthesis processor 140 generate a speech reply signal to speaker 245. Accordingly, Figure 2 illustrates the technique of using a single template memory for both speech recognition and speech synthesis.

The simplified example of a "smart" telephone terminal employing voice-controlled dialing from a stored telephone number directory is now used to describe the operation of the control system of Figure 2. Initially, an untrained speaker-dependent speech recognition system cannot recognize command words. Therefore, the user must manually prompt the device to begin the training procedure, perhaps by entering a particular code into the telephone keypad. Device controller 130 then directs switch 215 to enter the training mode (position "A"). Device controller 130 then instructs speech synthesizer 240 to respond with the predefined phrase TRAINING VOCABULARY ONE, which is a "canned" response obtained from reply memory 260. The user then begins to build a command word vocabulary by uttering command words, such as STORE or RECALL, into microphone 205. The features of the utterance are first extracted by acoustic processor 110, and then applied to either word averager 220 or data reducer 230. If the particular speech recognition system is designed to accept multiple utterances of the same word, word averager 220 produces a set of averaged word features representing the best representation of that particular word. If the system does not have word averaging capabilities, the single utterance word features (rather than the multiple utterance averaged word features) are applied to data reducer 230. The data reduction process removes unnecessary or duplicate feature data, compresses the remaining data, and provides template memory 160 with "reduced" word recognition templates. A similar procedure is followed for training the system to recognize digits.

Once the system is trained with the command word vocabulary, the user must continue the training procedure by entering telephone directory names and numbers. To accomplish this task, the user utters the previously-trained command word ENTER. Upon recognition of this utterance as a valid user command, device controller 130 instructs speech synthesizer 240 to reply with the "canned" phrase DIGITS PLEASE? stored in reply memory 260. Upon entering the appropriate telephone number digits (e.g., 555-1234), the user says TERMINATE and the system replys NAME PLEASE? to prompt user-entry of the corresponding directory name (e.g., SMITH). This user-interactive process continues until the telephone number directory is completely filled with the appropriate telephone names and digits.

To place a phone call, the user simply utters the command word RECALL. When the utterance is recognized as a valid user command by recognition processor 120, device controller 130 directs speech synthesizer 240 to generate the verbal reply NAME? via synthesizing information provided by reply memory 260. The user then responds by speaking the name in the directory index corresponding to the telephone number that he desires to dial (e.g. JONES). The word will be recognized as a valid directory entry if it corresponds to a predetermined name index controller 130 directs data expander 250 to obtain the appropriate reduced word recognition template from template memory 160 and perform the data expansion process for synthesis. Data expander 250 "unpacks" the reduced word feature data and restores the proper energy contour for an intelligible reply word. The expanded word template data is then fed to speech synthesizer 240. Using both the template data and the reply memory data, speech synthesizer 240 generates the phrase JONES... (from template memory 160 through data expander 250) ... FIVE-FIVE-FIVE, SIX-SEVEN-EIGHT-NINE (from reply memory 260).

The user then says the command word SEND which, when recognized by the control system, instructs device controller 130 to send telephone number dialing information to speech communications terminal 225. Terminal 225 outputs this dialing information via an appropriate communications link. When the telephone connection is made, speech communications terminal 225 interfaces microphone audio from microphone 205 to the appropriate transmit path, and receive audio from the appropriate receive audio path to speaker 245. If a proper telephone connection cannot be made, terminal controller 225 provides the appropriate communications link status information to device controller 130. Accordingly, device controller 130 instructs speech synthesizer 240 to generate the appropriate reply word corresponding to the status information provided, such as the reply word SYSTEM BUSY. In this manner, the user is informed of the communications link status, and user-interactive voice-controlled directory dialing is achieved.

The above operational description is merely one application of synthesizing speech from speech recognition templates according to the present invention. Numerous other applications of this novel technique to a speech communications device are contemplated, such as, for example, a communications console, a two-way radio, etc. In the preferred embodiment, the control system of the present invention is used with a mobile radiotelephone.

Although speech recognition and speech synthesis allows a vehicle operator to keep both eyes on the road, the conventional handset or hand-held microphone prohibits him from keeping both hands on the steering wheel or from executing proper manual (or automatic) transmission shifting. For this reason, the control system of the preferred embodiment incorporates a speakerphone to provide hands-free control of the speech communications device. The speakerphone performs the transmit/receive audio switching function, as well as the received/reply audio multiplexing function.

Referring now to Figure 3, control system 300 utilizes the same acoustic processor block 110, training processor block 170, recognition processor block 120, template memory block 160, device controller block 130, and synthesis processor block 140 as the corresponding blocks of Figure 2. However, microphone 302 and speaker 375 are not an integral part of the speech communications terminal. Instead, input speech signal from microphone 302 is directed to radiotelephone 350 via speakerphone 360. Similarly, speakerphone 360 also controls the multiplexing of the synthesized audio from the control system and the receive audio from the communications link. A more detailed analysis of the switching/multiplexing configuration of the speakerphone will be described later. Additionally, the speech communications terminal is now illustrated in Figure 3 as a radiotelephone having a transmitter and a receiver to provide the appropriate communications link via radio frequency (RF) channels. A detailed description of the radio blocks is also provided later.

Microphone 302, which is typically remotely-mounted at a distance from the user's mouth (e.g., on the automobile sun visor), acoustically couples the user's voice to control system 300. This speech signal is usually amplified by preamplifier 304 to provide input speech signal 305. This audio input is directly applied to acoustic processor 110, and is switched by speakerphone 360 before being applied to radiotelephone 350 via switched microphone audio line 315.

As previously mentioned, acoustic processor 110 extracts the features of the user-spoken input speech to provide word feature information to both training processor 170 and recognition processor 120. Acoustic processor 110 first converts the analog input speech into digital form by analog-to-digital (A/D) converter 310. This digital data is then applied to feature extractor 312, which digitally performs the feature extraction function. Any feature extraction implementation may be utilized in block 312, but the present embodiment utilizes a particular form of "channel bank" feature extraction. Under the channel bank approach, the audio input signal frequency spectrum is divided into individual spectral bands by a bank of bandpass filters, and the appropriate word feature data is generated according to an estimate of the amount of energy present in each band. A feature extractor of this type is described in the article: "The Effects of Selected Signal Processing Techniques on the Performance of a Filter Bank Based Isolated Word Recognizer", B.A. Dautrich, L.R. Rabiner, and T.B. Martin, Bell System Technical Journal, vol. 62, no. 5, (May-June 1983), pp. 1311-1335. An appropriate digital filter algorithm is described in Chapter 4 of L.R. Rabiner and B. Gold,

*Theory and Application of Digital Signal Processing*, (Prentice Hall, Englewood Cliffs, N.J., 1975).

Training processor 170 utilizes this word feature data to generate word recognition templates to be stored in template memory 160. First of all, endpoint detector 318 locates the appropriate beginning and end locations of the user's words. These endpoints are based upon the time-varying overall energy estimate of the input word feature data. An endpoint detector of this type is described by L.R. Rabiner and M.R. Sambur in "An Algorithm for Determining the Endpoints of Isolated Utterances", *Bell System Technical Journal*, vol. 54, no. 2, (February 1975), pp. 297-315.

Word averager 320 then combines the several utterances of the same word spoken by the user to provide a more reliable template. As previously described in Figure 2, any appropriate word averaging scheme may be utilized, or the word averaging function may be entirely omitted.

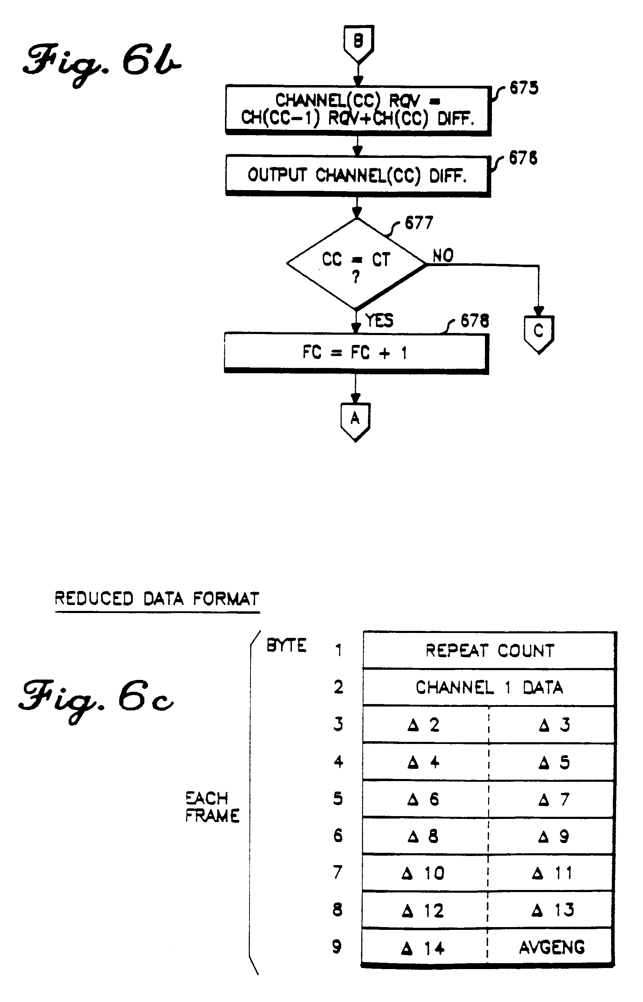

Data reducer 322 utilizes the "raw" word feature data from word averager 320 to generate "reduced" word feature data for storage in template memory 160 as reduced word recognition templates. The data reduction process basically consists of normalizing the energy data, segmenting the word feature data, and combining the data in each segment. After the combined segments have been generated, the storage requirements are further reduced by differential encoding of the filter data. The actual normalization, segmentation, and differential encoding steps of data reducer 322 are described in detail in conjunction with Figures 4 and 5. For a general memory map illustrating the reduced data format of template memory 160, refer to Figure 6c.

Endpoint detector 318, word averager 320, and data reducer 322 comprise training processor 170. In the training mode, training control signal 325, from device controller 130, instructs these three blocks to generate new word templates for storage in template memory 160. However, in the recognition mode, training control signal 325 directs these blocks to suspend the process of generating new word templates, since this function is not desired during speech recognition. Hence, training processor 170 is only used in the training mode.

Template memory 160 stores word recognition templates to be matched to the incoming speech in recognition processor 120. Template memory 160 is typically comprised of a standard Random Access Memory (RAM), which may be organized in any desired address configuration. A general purpose RAM which may be used with a speech recognition system is the Toshiba 5565 8k x 8 static RAM. However, a non-volatile RAM is preferred such that word templates are retained when the system is turned off. In the present embodiment, an EEPROM (Electrically-erasable, programmable read-only memory) functions as template memory 160.

Word recognition templates, stored in template memory 160, are provided to speech recognition processor 120 and speech synthesis processor 140. In the recognition mode, recognition processor 120 compares these previously stored word templates against the input word features provided by acoustic processor 110. In the present embodiment, recognition processor 120 may be thought of as being comprised of two distinct blocks --template decoder 328 and speech recognizer 326. Template decoder 328 interprets the reduced feature data provided by the template memory, such that speech recognizer 326 can perform its comparison function. Briefly described, template decoder 328 implements an efficient "nibble-mode access technique" of obtaining the reduced data from template storage, and performs differential decoding on the reduced data such that speech recognizer 326 can utilize the information. Template decoder 328 is described in detail in the text accompanying Figure 7b.

Hence, the technique of implementing data reducer 322 to compress the feature date into a reduced data format for storage in template memory 160, and the use of template decoder 328 to decode the reduced word template information, allows the present invention to minimize template storage requirements.

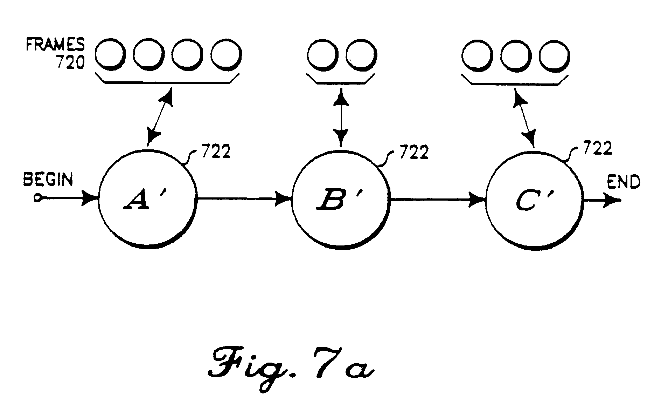

Speech recognizer 326, which performs the actual speech recognition comparison process, may use one of several speech recognition algorithms. The recognition algorithm of the present embodiment incorporates near-continuous speech recognition, dynamic time warping, energy normalization, and a Chebyshev distance metric to determine a template match. Refer to Figure 7a et seq. for a detailed description. Prior art recognition algorithms, such as described in J.S. Bridle, M.D. Brown, and R.M. Chamberlain, "An Algorithm for Connected Word Recognition," *IEEE International Conference on Acoustics, Speech, and Signal Processing*, May 3-5 1982, vol. 2, pp. 899-902, may also be used.

In the present embodiment, an 8-bit microcomputer performs the function of speech recognizer 326. Moreover, several other control system blocks of Figure 3 are implemented in part by the same microcomputer with the aid of a CODEC/FILTER and a DSP (Digital Signal Processor). An alternate hardware configuration for speech recognizer 326, which may be used in the present invention is described in an article by J. Peckham, J. Green, J. Canning, and P. Stevens, entitled "A Real-Time Hardware Continuous Speech Recognition System," *IEEE International Conference on Acoustics, Speech, and Signal Processing*, (May 3-5 1982), vol. 2, pp. 863-866, and the references contained therein. Hence, the present invention is not limited to any specific hardware or any specific type of speech recognition. More particularly, the present invention contemplates the use of: isolated or continuous word recognition; and a software-based or hardware-based implementation.

Device controller 130, consisting of control unit 334 and directory memory 332, serves to interface speech recognition processor 120 and speech synthesis processor 140 to radiotelephone 350 via two-way interface busses. Control unit 334 is typically a controlling microprocessor which is capable of interfacing data from radio logic 352 to the other blocks of the control system. Control unit 334 also performs operational control of radiotelephone 350, such as: unlocking the control head; placing a telephone call; ending a telephone call; etc. Depending on the particular hardware interface structure to the radio, control unit 334 may incorporate other sub-blocks to perform specific control functions as DTMF dialing, interface bus multiplexing, and control-function decision-making. Moreover, the data-interfacing function of control unit 334 can be incorporated into the existing hardware of radio logic 352. Hence, a hardware-specific control program would typically be provided for each type of radio or for each kind of electronic device application.

Directory memory 332, an EEPROM, stores the plurality of telephone numbers, thereby permitting directory dialing. Stored telephone number directory information is sent from control unit 334 to directory memory 332 during the training process of entering telephone numbers, while this directory information is provided to control unit 334 in response to the recognition of a valid directory dialing command. Depending on the particular device used, it may be more economical to incorporate directory memory 332 into the telephone device itself. In general, however, controller block 130 performs the telephone directory storage function, the telephone number dialing function, and the radio operational control function.

Controller block 130 also provides different types of status information, representing the operating status of the radiotelephone, to speech synthesis processor 140. This status information may include information as to the telephone numbers stored in directory memory 332 ("555-1234", etc.), directory names stored in template memory 160 ("Smith", "Jones", etc.), directory status information ("Directory Full", "Name?", etc.), speech recognition status information ("Ready", "User Number?", etc.), or radiotelephone status information ("Call Dropped", "System Busy", etc.). Hence, controller block 130 is the heart of the user-interactive speech recognition/speech synthesis control system.

Speech synthesis processor block 140 performs the voice reply function. Word recognition templates, stored in template memory 160, are provided to data expander 346 whenever speech synthesis from a template is required. As previously mentioned, data expander 346 "unpacks" the reduced word feature data from template memory 160 and provides "template" voice response data for channel bank speech synthesizer 340. Refer to Figure 8a et seq. for a detailed explanation of data expander 346.

If the system controller determines that a "canned" reply word is desired, reply memory 344 supplies voice reply data to channel bank speech synthesizer 340. Reply memory 344 typically comprises a ROM or an EPROM. In the preferred embodiment, an Intel TD27256 EPROM is used as reply memory 344.

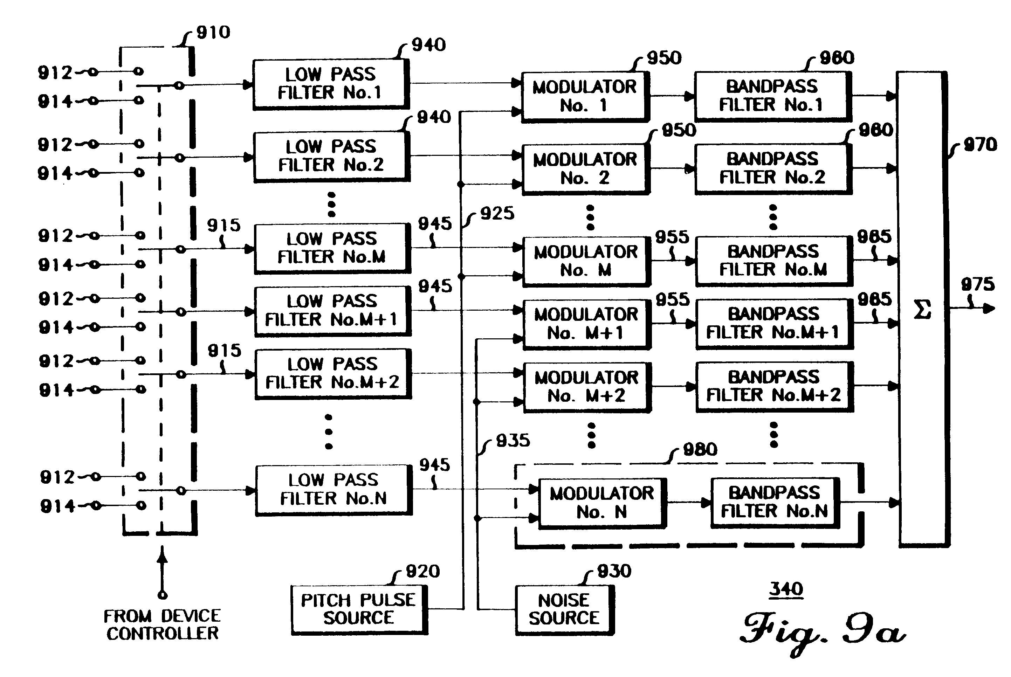

Using either the "canned" or "template" voice reply data, channel bank speech synthesizer 340 synthesizes these reply words, and outputs them to digital-to-analog (D/A) converter 342. The voice reply is then routed to the user. In the present embodiment, channel bank speech synthesizer 340 is the speech synthesis portion of a 14-channel vocoder. An example of such a vocoder may be found in J.N. Holmes, "The JSRU Channel Vocoder", IEE PROC., vol. 127, pt. F, no. 1, (February, 1980), pp. 53-60. The information provided to a channel bank synthesizer normally includes whether the input speech should be voiced or unvoiced, the pitch rate if any, and the gain of each of the 14 filters. However, as will be obvious to those skilled in the art, any type of speech synthesizer may be utilized to perform the basic speech synthesis function. The particular configuration of channel bank speech synthesizer 340 is fully described in conjunction with Figure 9a et seq.

As we have seen, the present invention teacher the implementation of speech synthesis from a speech recognition template to provide a user-interactive control system for a speech communications device. In the present embodiment, the speech communications device is a radio transceiver, such as a cellular mobile radiotelephone. However, any speech communications device warranting hands-free user-interactive operation may be used. For example, any simplex radio transceiver requiring hands-free control may also take advantage of the improved control system of the present invention.

Referring now to radiotelephone block 350 of Figure 3, radio logic 352 performs the actual radio operational control function. Specifically, it directs frequency synthesizer 356 to provide channel information to transmitter 353 and receiver 357. The function of frequency synthesizer 356 may also be performed by crystal-controlled channel oscillators. Duplexer 354 interfaces transmitter 353 and receiver 357 to a radio frequency (RF) channel via antenna 359. In the case of a simplex radio transceiver, the function of duplexer 354 may be performed by an RF switch. For a more detailed explanation of representative radiotelephone circuitry, refer to Motorola Instruction Manual 68P81066E40 entitled "DYNA T.A.C. Cellular Mobile Telephone."

Speakerphone 360, also termed a VSP (vehicular speakerphone) in the present application, provides hands-free acoustic coupling of: the user-spoken audio to the control system and to the radio telephone transmitter audio; the synthesized speech reply signal to the user; and the received audio from the radiotelephone to the user. As previously noted, preamplifier 304 may perform amplification upon the audio signal provided by microphone 302 to produce input speech signal 305 to acoustic processor 110. This input speech signal is also applied to VSP transmit audio switch 362, which routes input signal 305 to radio transmitter 353 via transmit audio 315. VSP transmit switch 362 is controlled by VSP signal detector 364. Signal detector 364 compares input signal 305 amplitude against that of receive audio 355 to perform the VSP switching function.

When the mobile radio user is talking, signal detector 364 provides a positive control signal via detector output 361 to close transmit audio switch 362, and a negative control signal via detector output 363 to open receive audio switch 368. Conversely, when the landline party is talking, signal detector 364 provides the opposite polarity signals to close receive audio switch 368, while opening transmit audio switch 362. When the receive audio switch is closed, receiver audio 355 from radiotelephone receiver 357 is routed through receive audio switch 368 to multiplexer 370 via switched receive audio output 367. In some communications systems, it may prove advantageous to replace audio switches 362 and 368 with variable gain devices that provide equal but opposite attenuations in response to the control signals from the signal detector.

Multiplexer 370 switches between voice reply audio 345 and switched receive audio 367 in response to multiplex signal 335 from control unit 334. Whenever the control unit sends status information to the speech synthesizer, multiplexer signal 335 directs multiplexer 370 to route the voice reply audio to the speaker. VSP audio 365 is usually amplified by audio amplifier 372 before being applied to speaker 375. It is to be noted that the vehicle speakerphone embodiment described herein is only one of numerous possible configurations which can be used in the present invention.

In summary, Figure 3 illustrates a radiotelephone having a hands-free user-interactive speech-recognizing control system for controlling radiotelephone operating parameters upon a user-spoken command. The control system provides audible feedback to the user via speech synthesis from speech recognition template memory or a "canned" response reply memory. The vehicle speakerphone provides hands-free acoustic coupling of the user-spoken input speech to the control system and to the radio transmitter, the speech reply signal from the control system to the user, and the receiver audio to the user. The implementation of speech synthesis from recognition templates significantly improves the performance and versatility of the radiotelephone's speech recognition control system.

## 2. Data Reduction and Template Storage

Referring to Figure 4a, an expanded block diagram of data reducer 322 is shown. As previously stated, data reducer block 322 utilizes raw word feature data from word averager 320 to generate reduced word feature data for storage in template memory 160. The data reduction function is performed in three steps: (1) energy normalization block 410 reduces the range of stored values for channel energies by subtracting the average value of the channel energies; (2) segmentation/compression block 420 segments the word feature data and combines acoustically similar frames to form "clusters"; and (3) differential encoding block 430 generates the differences between adjacent channels for storage, rather than the actual channel energy data, to further reduce storage requirements. When all three processes have been performed, the reduced data format for each frame is stored in only nine bytes as shown in Figure 6c. In short, data reducer 322 "packs" the raw word data into a reduced data format to minimize storage requirements.

The flowchart of Figure 4b illustrates the sequence of steps performed by energy normalization block 410 of the previous figure. Upon starting at block 440, block 441 initializes the variables which will be used in later calculations. Frame count FC is initialized to one to correspond to the first frame of the word to be data reduced. Channel total CT is initialized to the total number of channels corresponding to those of the channel bank feature extractor 312. In the preferred embodiment, a 14-channel feature extractor is used.

Next, the frame total FT is calculated in block 442. Frame total FT is the total number of frames per word to be stored in the template memory. This frame total information is available from training processor 170. To illustrate, say that the acoustic features of a 500 millisecond duration input word are (digitally) sampled every 10 milliseconds. Each 10 millisecond time segment is called a frame. The 500 millisecond word then comprises 50 frames. Thus, FT would equal 50.

Block 443 tests to see if all the frames of the word have been processed. If the present frame count FC is greater than the frame total FT, no frames of the word would be left to normalize, so the energy

11

normalization process for that word will end at block 444. If, however, FC is not greater than FT, the energy normalization process continues with the next frame of the word. Continuing with the above example of a 50-frame word, each frame of the word is energy normalized in blocks 445 through 452, the frame count FC is incremented in block 453, and FC is tested in block 443. After the 50th frame of the word has been energy normalized, FC will be incremented to 51 in block 453. When a frame count FC of 51 is compared to the frame total FT of 50, block 443 will terminate the energy normalization process at block 444.

The actual energy normalization procedure is accomplished by subtracting the average value of all of the channels from each individual channel to reduce the range of values stored in the template memory. In block 445, the average frame energy (AVGENG) is calculated according to the formula:

$$\text{AVGENG} = \overset{i=CT}{\underset{i=1}{\text{SUM}}} \text{CH}(i) \; / \; \text{CT}.$$

where CH(i) is the individual channel energies, and where CT equals the total number of channels. It should be noted that in the present embodiment, energies are stored as log energies and the energy normalization process actually subtracts the average log energy from the log energy of each channel.

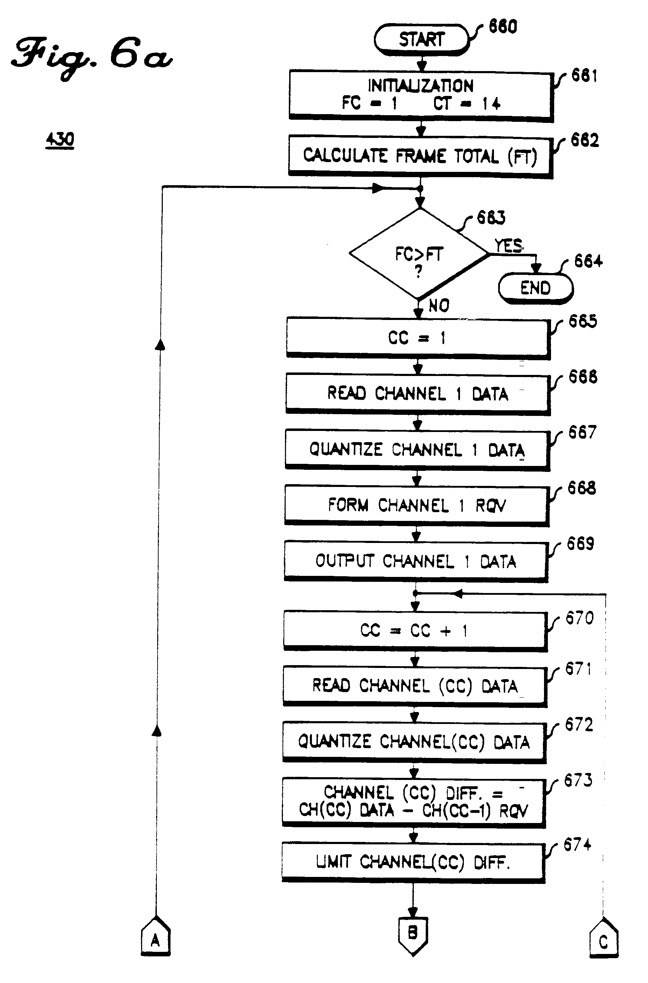

The average frame energy AVGENG is output in block 446 to be stored at the end location of the channel data for each frame. (See Figure 6c byte 9.) In order to efficiently store the average frame energy in four bits, AVGENG is normalized to the peak energy value of the entire template, and then quantized to 3 dB steps. When the peak energy is assigned a value of 15 (the four-bit maximum), the total energy variation within a template would be 16 steps x 3 dB/step = 48 dB. In the preferred embodiment, this average energy normalization/quantization is performed after the differential encoding of channel 14 (Figure 6a) to permit higher precision calculations during the segmentation/compression process (block 420).

Block 447 sets the channel count CC to one. Block 448 reads the channel energy addressed by the channel counter CC into an accumulator. Block 449 subtracts the average energy calculated in block 445 from the channel energy read in block 448. This step generates normalized channel energy data, which is then output (to segmentation/compression block 420) in block 450. Block 451 increments the channel counter, and block 452 tests to see if all channels have been normalized. If the new channel count is not greater than the channel total, then the process returns to block 448 where the next channel energy is read. If, however, all channels of the frame have been normalized, the frame count is incremented in block 453 to obtain the next frame of data. When all frames have been normalized, the energy normalization process of data reducer 322 ends at block 444.

Refering now to Figure 4c, shown is a block diagram illustrating an implentation of the data reducer, block 420. The input feature data is stored in frames in initial frame storage, block 502. The memory used for storage is preferred to be RAM. A segmentation controller, block 504, is used to control and to designate which frames will be considered for clustering. A number of microprocessors can be used for this purpose, such as the Motorola type 6805 microprocessor.

The present invention requires that incoming frames be considered for averaging by first calculating a distortion measure associated with the frames to determine the similarity between the frames before averaging. The calculation is preferably made by a microprocessor, similar to, or the same as that used in block 504. Details of the calculation are subsequently discussed.

Once it has been determined which frames will be combined, the frame averager, block 508, combines the frames into a representative average frame. Again, similar type processing means, as in block 504, can be used for combining the specified frames for averaging.

To effectively reduce the data, the resulting word templates should occupy as little template storage as possible without being distorted to the point that the recognition process is degraded. In other words, the amount of information representing the word templates should be minimized, while, at the same time, maximizing the recognition accuracy. Although the two extremes are contradictory, the word template data can be minimized if a minimal level of distortion is allowed for each cluster.

Figure 5a illustrates a method for clustering frames for a given level of distortion. Speech is depicted as feature data grouped in frames 510. The five center frames 510 form a cluster 512. The cluster 512 is combined into a representative average frame 514. The average frame 514 can be generated by any number of known averaging methods according to the particular type of feature data used in the system. To determine whether a cluster meets the allowable distortion level, a prior art distortion test can be used.

However, it is preferred that the average frame 514 be compared to each of the frames 510 in the cluster 512 for a measure of similarity. The distance between the average frame 514 and each frame 510 in the cluster 512 is indicated by distances D1-D5. If one of these distances exceeds the allowable distortion level, the threshold distance, the cluster 512 is not considered for the resulting word template. If the threshold distance is not exceeded, the cluster 512 is considered as a possible cluster represented as the average frame 514.

This technique for determining a valid cluster is referred to as a peak distortion measure. The present embodiment uses 2 types of peak distortion criteria, peak energy distortion and peak spectral distortion. Mathematically, this is stated as follows:

$$D = \max [D1, D2, D3, D4, D5],$$

where D1-D5, as discussed above, represent each distance.

These distortion measures are used as local constraints for restricting which frames may be combined into an average frame. If D exceeds a predetermined distortion threshold for either energy or spectral distortion, the cluster is rejected. By maintaining the same constraints for all clusters, a relative quality of the resulting word template is realized.

This clustering technique is used with dynamic programming to optimally reduce the data representing the word template. The principle of dynamic programming can be mathematically stated as follows:

$$Y_o = 0$$

and

$$Y_j = \min [Y_i + C_{ij}],$$

for all i,

where $Y_j$ is the cost of the least cost path from node 0 to node j and $C_{ij}$ is the cost incurred in moving from node i to node j. The integer values of i and j range over the possible number of nodes.

To apply this principle to the reduction of word templates in accordance with the present invention, several assumptions are made. They are:

The information in the templates is in the form of a series of frames, spaced equally in time;

A suitable method of combining frames into an average frame exists;

A meaningful distortion measure exists for comparing an average frame to an original frame; and

Frames may be combined only with adjacent frames.

The end objective of the present invention is to find the minimal set of clusters representing the template, subject to the constraint that no cluster exceeds a predetermined distortion threshold.

The following definitions allow the principle of dynamic programming to be applied to data reduction according to the present invention.

$Y_j$ is the combination of clusters for the first j frames;

$Y_o$ is the null path, meaning there are no clusters at this point;

$C_{ij} = 1$ if the cluster of frames, i + 1 through j, meets the distortion criteria, $C_{ij}$ = infinity otherwise.

The clustering method generates optimal cluster paths starting at the first frame of the word template. The cluster paths assigned at each frame within the template are referred to as partial paths since they do not completely define the clustering for the entire word. The method begins by initializing the null path, associated with 'frame 0', to 0, i.e. $Y_o = 0$. This indicates that a template with zero frames has zero clusters associated with it. A total path distortion is assigned to each path to describe its relative quality. Although any total distortion measure can be used, the implementation described herein uses the maximum of the peak spectral distortions from all the clusters defining the current path. Accordingly, the null path, $Y_o$, is assigned zero total path distortion, TPD.

To find the first partial path or combination of clusters, partial path Y1 is defined as follows:

$$Y1 \text{ (partial path at frame one)} = Y0 + C0,1$$

This states that the allowable clusters of one frame can be formed by taking the null path, Y0, and appending all frames up to frame 1. Hence, the total cost for partial path Y1 is 1 cluster and the total path distortion is zero, since the average frame is identical to the actual frame.

The formation of the second partial path, Y2, requires that two possibilities be considered. They are:

$$Y2 = \min [Y0 + C0,2;$$
$$Y1 + C1,2].$$

The first possibility is the null path, Y0, with frames 1 and 2 combined into one cluster. The second possibility is the first frame as a cluster, partial path Y1, plus the second frame as the second cluster.

The first possibility has a cost of one cluster while the second has a cost of two clusters. Since the object in optimizing the reduction is to obtain the fewest clusters, the first possibility is preferred. The total cost for the first possibility is one cluster. Its TPD is equal to the peak distortion between each frame and the average of the two frames. In the instance that the first possibility has a local distortion which exceeds the predetermined threshold, the second possibility is chosen.

To form partial path Y3, three possibilities exist:

$$Y3 = \min [Y0 + C0,3;$$
$$Y1 + C1,3;$$
$$Y2 + C2,3].$$

The formation of partial path Y3 depends upon which path was chosen during the formation of partial path Y2. One of the first two possibilities is not considered, since partial path Y2 was optimally formed. Hence, the path that was not chosen at partial path Y2 need not be considered for partial path Y3. In carrying out this technique for large numbers of frames, a globally optimal solution is realized without searching paths that will never become optimum. Accordingly, the computation time required for data reduction is substantially reduced.

Figure 5b illustrates an example of forming the optimal partial path in a four frame word template. Each partial path, Y1 through Y4, is shown in a separate row. The frames to be considered for clustering are underlined. The first partial path, defined as Y0 + C0,1, has only one choice, 520. The single frame is clustered by itself.

For partial path Y2, the optimal formation includes a cluster with the first two frames, choice 522. In this example, assume the local distortion threshold is exceeded, therefore the second choice 524 is taken. The X over these two combined frames 522 indicates that combining these two frames will no longer be held as a consideration for a viable average frame. Hereinafter, this is referred to as an invalidated choice. The optimal cluster formation up to frame 2 comprises two clusters, each with one frame 524.

For partial path Y3, there are three sets of choices. The first choice 526 is the most desirable but it would typically be rejected since combining the first two frames 522 of partial path Y2 exceeds the threshold. It should be noted that this is not always the case. A truly optimal algorithm would not immediately reject this combination based solely on the invalidated choice 522 of partial path Y2. The inclusion of additional frames into a cluster which already exceeds the distortion threshold occasionally causes the local distortion to decrease. However, this is rare. In this example, such an inclusion is not considered. Larger combinations of an invalidated combination will also be invalidated. Choice 530 is invalidated because choice 522 was rejected. Accordingly, an X is depicted over the first and third choices 526 and 530, indicating an invalidation of each. Hence, the third partial path, Y3, has only two choices, the second 528 and the fourth 532. The second choice 528 is more optimal (fewer clusters) and, in this example, is found not to exceed the local distortion threshold. Accordingly, the fourth choice 532 is invalidated since it is not optimal. This invalidation is indicated by the XX over the fourth choice 532. The optimal cluster formation up to frame 3 comprises two clusters 528. The first cluster contains only the first frame. The second cluster contains frames 2 and 3.

The fourth partial path, Y4, has four conceptual sets from which to choose. The X indicates that choices 534, 538, 542 and 548 are invalidated as a consequence of choice 522, from the second partial path, Y2, being invalidated. This results in consideration of only choices 536, 540, 544 and 546. Since choice 546 is known to be a non-optimal choice, since the optimal clustering up to Y3 is 528 not 532, it is invalidated, as indicated by XX. Choice 536, of the remaining three choices, is selected next, since it minimizes the number of representative clusters. In this example, choice 536 is found not to exceed the local distortion threshold. Therefore, the optimal cluster formation for the entire word template comprises only two clusters. The first cluster contains only the first frame. The second cluster contains frames 2 through 4. Partial path Y4 represents the optimally reduced word template. Mathematically, this optimal partial path is defined as: Y1 + C1,4.

The above path forming procedure can be improved upon by selectively ordering the cluster formations for each partial path. The frames can be clustered from the last frame of the partial path toward the first frame of the partial path. For example, in forming a partial path Y10, the order of clustering is: Y9 + C9,10; Y8 + C8,10; Y7 + C7,10; etc. The cluster consisting of frame 10 is considered first. Information defining this cluster is saved and frame 9 is added to the cluster, C8,10. If clustering frames 9 and 10 exceeds the local distortion threshold, then the information defining cluster C9,10 is not considered an additional cluster appended to partial path Y9. If clustering frames 9 and 10 does not exceed the local distortion threshold, then cluster C8,10 is considered. Frames are added to the cluster until the threshold is exceeded, at which time the search for partial paths at Y10 is completed. Then, the optimal partial path, path with least clusters, is chosen from all the preceding partial paths for Y10. This selective order of clustering limits the testing of potential cluster combinations, thereby reducing computation time.

In general, at an arbitrary partial path Yj, a maximum of j cluster combinations are tested. Figure 5c illustrates the selective ordering for such a path. The optimal partial path is mathematically defined as:

$$Yj = min [Yj-1 + Cj-1,j; \ldots ; Y1 + C1,j; Y0 + C0,j].$$

where min is min number of clusters in cluster path that satisfies distortion criteria. Marks are placed on the horizontal axis of Figure 5c, depicting each frame. The rows shown vertically are cluster formation possibilities for partial path Yj. The lowest set of brackets, cluster possibility number 1, determines the first potential cluster formation. This formation includes the single frame, j, clustered by itself and the optimal partial path Yj-1. To determine if a path exists with a lower cost, possibility two is tested. Since partial path Yj-2 is optimal up to frame j-2, clustering frames j and j-1 determines if another formation exists up to frame j. Frame j is clustered with additional adjacent frames until the distortion threshold is exceeded. When the distortion threshold is exceeded, the search for partial path Yj is completed and the path with the fewest clusters is taken as Yj.

Ordering the clustering in this manner forces only frames immediately adjacent to frame j to be clustered. An additional benefit is that invalidated choices, are not used in determining which frames should be clustered. Hence, for any single partial path, a minimum number of frames are tested for clustering and only information defining one clustering per partial path is stored in memory.

The information defining each partial path includes three parameters:
1) The total path cost, i.e., the number of clusters in the path.
2) A trace-back pointer indicating the previous path formed. For example, if partial path Y6 is defined as (Y3 + C3,6), then the trace-back pointer for Y6 points to partial path Y3.
3) The total path distortion (TPD) for the current path, reflecting the overall distortion of the path.

The traceback pointers define the clusters within the path.

The total path distortion reflects the quality of the path. It is used to determine which of two possible path formations, each having equal minimal cost (number of clusters), is the most desirable.

The following example illustrates an application of these parameters.

Let the following combinations exist for partial path Y8:

$$Y8 = Y3 + C3,8 \text{ or } Y5 + C5,8.$$

Let the cost of partial path Y3 and partial path Y5 be equal and let clusters C3,8 and C5,8 both pass the local distortion constraints.

The desired optimal formation is that which has the least TPD. Using the peak distortion test, the optimal formation for partial path Y8 is determined as:

$min[max [Y3_{TPD}; \text{peak distortion of cluster 4-8}]; max[Y5_{TPD}; \text{peak distortion of cluster 6-8}]].$

The trace-back pointer would be set to either Y3 or Y5, depending on which formation has the least TPD.

Now referring to Figure 5d, shown is a flowchart illustrating the formation of partial paths for a sequence of j frames. Discussion of this flowchart pertains to a word template having 4 frames, i.e. N = 4. The resulting data reduced template is the same as in the example from Figure 5b, where Yj = Y1 + C1,4.

The null path, partial path Y0, is initialized along with the cost, the traceback pointers and the TPD, block 550. It should be noted that that each partial path has its own set of values for TPD, cost and TBP. A frame pointer, j, is initialized to 1, indicating the first partial path, Y1, block 552. Continuing on to the second part of the flowchart, at Figure 5e, a second frame pointer, k, is initialized to 0, block 554. The second frame pointer is used to specify how far back frames are considered for clustering in the partial path. Hence, the frames to be considered for clustering are specified from k + 1 to j.

These frames are averaged, block 556, and a cluster distortion is generated, block 558. A test is performed to determine if the first cluster of partial path is being formed, block 562. In this instance, the first partial path is being formed. Therefore, the cluster is defined in memory by setting the necessary parameters, block 564. Since this is the first cluster in the first partial path, the traceback pointer (TPD) is set to the null word, the cost is set to 1 and the TPD remains at 0.

The cost for the path ending at frame j is set as the cost of the path ending at j (number of clusters in path j) plus one for the new cluster being added. Testing for a larger cluster formation begins by decrementing the second frame pointer, k, depicted in block 566. At this point, since k is decremented to -1, a test is performed to prevent invalid frame clusters, block 568. A positive result from the test performed at block 568 indicates that all partial paths have been formed and tested for optimality. The first partial path is mathematically defined as $Y1 = Y0 + C0,1$. It is comprised of one cluster containing the first frame. The test illustrated in block 570 determines whether all frames have been clustered. There are three frames yet to cluster. The next partial path is initialized by incrementing the first frame pointer j, block 572. The second frame pointer is initialized to one frame before j, block 554. Accordingly, j points to frame 2 and k points to frame 1.

Frame 2 is averaged by itself at block 556. The test performed at block 562 determines that j is equal to $k + 1$ and flow proceeds to block 564 to define the first partial path Y2. The pointer k is decremented at block 566 for the next cluster consideration.

Frames 1 and 2 are averaged to form $Y0 + C0,2$, block 556, and a distortion measure is generated, block 558. Since this is not the first path being formed, block 562, flow proceeds to block 560. The distortion measure is compared to the threshold, block 560. In this example, combining frames 1 and 2 exceeds the threshold. Thus, the previously saved partial path, i.e., $Y1 + C1,2$, is saved for partial path Y2 and the flowchart branches to block 580.

The step depicted in block 580 performs a test to determine whether any additional frames should be clustered with these frames that have exceeded the threshold, block 580. Typically, due to the nature of most data, adding additional frames at this point will also result in an exceeded distortion threshold. However, it has been found that if the generated distortion measure does not exceed the threshold by more than about 20%, additional frames may cluster without exceeding the distortion threshold. If further clustering is desired, the second frame pointer is decremented to specify the new cluster, block 566. Otherwise, the test is performed to indicate whether all frames have been clustered, block 570.

The next partial path is initialized with j set equal to 3, block 572. The second frame pointer is initialized to 2. Frame 3 is averaged by itself, block 556, and a distortion measure is generated, block 558. Since this is the first path formed for Y3, this new path is defined and saved in memory, block 564. The second frame pointer is decremented, block 566, to specify a larger cluster. The larger cluster comprises frames 2 and 3.

These frames are averaged, block 556, and a distortion is generated, block 558. Since this is not the first path formed, block 562, flow proceeds to block 560. In this example, the threshold is not exceeded, block 560. Since this path $Y1 + C1,3$ is more optimal, with two clusters, than path $Y2 + C2,3$, with three clusters, path $Y1 + C1,3$ replaces the previously saved path $Y2 + C2,3$ as partial path Y3. A larger cluster is specified as K is decremented to 0, block 566.

Frames 1 through 3 are averaged, block 556, and another distortion measure is generated, block 558. In this example, the threshold is exceeded, block 560. No additional frames are clustered, block 580, and the test is again performed to determine whether all the frames have been clustered, block 570. Since frame 4 is still not yet clustered, j is incremented for the next partial path, Y4. the second frame pointer is set at frame 3 and the clustering process repeats.

Frame 4 is averaged by itself, block 556. Again, this is the first path formed, in block 562, and the path is defined for Y4, block 564. This partial path $Y3 + C3,4$ has a cost of 3 clusters. A larger cluster is specified, block 566, and frames 3 and 4 are clustered.

Frames 3 and 4 are averaged, block 556. In this example their distortion measure does not exceed the threshold, block 560. This partial path $Y2 + C2,4$ has a cost of 3 clusters. Since this has the same cost as the previous path $(Y3 + C3,4)$, flow proceeds thru blocks 574 and 576 to block 578, and the TPD is examined to determine which path has the least distortion. If the current path $(Y2 + C2,4)$ has a lower TPD, Block 578, than the current path $(Y3 + C3,4)$, then it will replace the current path, block 564 otherwise flow procedes to block 566. A larger cluster is specified, block 566, and frames 2 through 4 are clustered.

Frames 2 through 4 are averaged, block 556. In this example, their distortion measure again does not exceed the threshold. This partial path $Y1 + C1, 4$ has a cost of 2 clusters. Since this is a more optimal path for partial path Y4, block 574 than the previous, the path is defined in place of the previous, block 564. A larger cluster is specified, block 566, and frames 1 through 4 are clustered.

16

Averaging frames 1 through 4, in this example, exceeds the distortion threshold, block 560. Clustering is stopped, block 580. Since all the frames have been clustered, block 570, the stored information defining each cluster defines the optimal path for this 4-frame data reduced word template, block 582, mathematically defined as $Y4 = Y1 + C1,4$.

This example illustrates the formation of the optimal data reduced word template from Figure 3. The flowchart illustrates clustering tests for each partial path in the following order:

Y1:  $\underline{1}$ 2 3 4
Y2:  1 $\underline{2}$ 3 4 *1 $\underline{2}$ 3 4
Y3:  1 $\underline{2\ 3}$ 4 1 $\underline{2\ 3}$ 4 *1 $\underline{2\ 3}$ 4
Y4:  1 $\underline{2\ 3\ 4}$ 1 $\underline{2\ 3\ 4}$ 1 $\underline{2\ 3\ 4}$ *1 2 3 4.

The numbers indicating the frame are underlined for each cluster test. Those clusters that exceed the threshold are indicated as such by a preceding '*'.

In this example, 10 cluster paths are searched. In general, using this procedure requires at most $[N(N + 1)]/2$ cluster paths to search for the optimal cluster formation, where N is the number of frames in the word template. For a 15 frame word template, this procedure would require searching at most 120 paths, compared to 16,384 paths for a search attempting to try all possible combinations. Consequently, by using such a procedure in accordance with the present invention, an enormous reduction in computation time is realized.

Even further reduction in computation time can be realized by modifying blocks 552, 568, 554, 562, and 580 of Figure 5e. Block 568 illustrates a limit being placed on the second frame pointer, k. In the example, k is limited only by the null path, partial path Y0, at frame 0. Since k is used to define the length of each cluster, the number of frames clustered can be constrained by constraining k. For any given distortion threshold, there will almost always be a number of frames that, when clustered, will cause a distortion that exceeds the distortion threshold. On the other extreme, there is always a minimal cluster formation that will never cause a distortion that exceeds the distortion threshold. Therefore, by defining a maximum cluster size, MAXCS, and minimum cluster size, MINCS, the second frame pointer, k, can be constrained.

MINCS would be employed in blocks 552, 554 and 562. For block 552, j would be initialized to MINCS. For block 554, rather than subtract one from k in this step, MINCS would be subtracted. This forces k back a certain number of frames for each new partial path. Consequently, clusters with frames less than MINCS will not be averaged. It should also be noted that to accommodate MINCS, block 562 should depict the test of $j = k + MINCS$ rather than $j = k + 1$.

MAXCS would be employed in block 568. The limit becomes either frames before 0 (k<0) or frames before that, designated by MAXCS (k<0-MAXCS). This prevents testing clusters that are known to exceed MAXCS.

According to the notation used with Figure 5e, these constraints can be mathematically expressed as follows:

$k \geq j - MAXCS$ and $k \geq 0$; and
$k \leq j - MINCS$ and $j \geq MINCS$.

For example, let MAXCS = 5 and and MINCS = 2 for a partial path Y15. Then the first cluster consists of frames 15 and 14. The last cluster consists of frames 15 through 11. The constraint that j has to be greater or equal to MINCS prevents clusters from forming within the first MINCS frames.

Notice (block 562) that clusters at size MINCS are not tested against the distortion threshold (block 560). This insures that a valid partial path will exist for all yj, $j \geq MINCS$.

By utilizing such constraints in accordance with the present invention, the number of paths that are searched is reduced according to the difference between MAXCS and MINCS.

Now referring to Figure 5f, block 582 from Figure 5e is shown in further detail. Figure 5f illustrates a method to generate output clusters after data reduction by using the trace back pointer (TBP in block 564 of Figure 5) from each cluster in reverse direction. Two frame pointers, TB and CF are initialized, block 590. TB is initialized to the trace back pointer of the last frame. CF, the current end frame pointer, is initialized to the last frame of the word template. In the example from Figure 5d and 5e, TB would point at frame 1 and CF would point at frame 4. Frames TB + 1 through CF are averaged to form an output frame for the resulting word template, block 592. A variable for each averaged frame, or cluster, stores the number of frames combined. It is referred to as "repeat count" and can be calculated from CF-TB. See Figure 6c, infra. A test is then performed to determine whether all clusters have been output, block 594. If not, the next cluster is pointed at by setting CF equal to TB and setting TB to the trace back pointer of new frame CF. This procedure continues until all clusters are averaged and output to form the resultant word template.

17

Figures 5g, 5h and 5i illustrates a unique application of the trace back pointers. The trace back pointers are used in a partial trace back mode for outputting clusters from data with an indefinite number of frames, generally referred to as infinite length data. This is different than the examples illustrated in Figures 3 and 5, since those examples used a word template with a finite number of frames, 4.

Figure 5g illustrates a series of 24 frames, each assigned a trace back pointer defining the partial paths. In this example MINCS has been set to 2 and MAXCS has been set at 5. Applying partial trace back to infinite length data requires that clustered frames be output continuously to define portions of the input data. Hence, by employing the trace back pointers in a scheme of partial trace back, continuous data can be reduced.

Figure 5h illustrates all partial paths, ending at frames 21-24, converging at frame 10. Frames 1-4, 5-7 and 8-10 were found to be optimal clusters and since the convergence point is frame 10, they can be output.

Figure 5i shows the remaining tree after frames 1-4, 5-7 and 8-10 have been output. Figures 5g and 5h shows the null pointer at frame 0. After the formation of Figure 5i, the convergence point of frame 10 designates the location of the new null pointer. By tracing back through to the convergence point and outputting frames through that point, infinite length data can be accommodated.

In general, if at frame n, the points to start trace back are n, n-1, n-2, .. n-MAXCS, since these paths are still active and can be combined with more incoming data.

The flowchart of Figures 6a and 6b illustrates the sequence of steps performed by differential encoding block 430 of Figure 4a. Starting with block 660, the differential encoding process reduces template storage requirements by generating the differences between adjacent channels for storage rather than each channel's actual energy data. The differential encoding process operates on a frame-by-frame basis as described in Figure 4b. Hence, initialization block 661 sets the frame count FC to one and the channel total CT to 14. Block 662 calculates the frame total FT as before. Block 663 tests to see if all frames of the word have been encoded. If all frames have been processed, the differential encoding ends with block 664.

Block 665 begins the actual differential encoding procedure by setting the channel count CC equal to 1. The energy normalized data for channel one is read into the accumulator in block 666. Block 667 quantizes the channel one data into 1.5 dB steps for reduced storage. The channel data from feature extractor 312 is initially represented as 0.376 dB per step utilizing 8 bits per byte. When quantized into 1.5 dB increments, only 6 bits are required to represent a 96 dB energy range ($2^6$ x 1.5 dB). The first channel is not differentially encoded so as to form a basis for determining adjacent channel differences.

A significant quantization error could be introduced into the differential encoding process of block 430 if the quantized and limited values of the channel data are not used for calculating the channel differentials. Therefore, an internal variable RQV, the reconstructed quantized value of the channel data is introduced inside the differential encoding loop to take this error into account. Block 668 forms the channel one RQV for later use by simply assigning it a value of the channel one quantized data, since channel one is not differentially encoded. Block 675, discussed below, forms the RQV for the remaining channels. Hence, the quantized channel one data is output (to template memory 160) in block 669.

The channel counter is incremented in block 670, and the next channel data is read into the accumulator at block 671. Block 672 quantizes the energy of this channel data at 1.5 dB per step. Since differential encoding stores the differences between channels rather than the actual channel values, block 673 determines the adjacent channel differences according to the equation:

Channel (CC) differential = CH(CC)data - CH(CC-1)RQV

where CH(CC-1)RQV is the reconstructed quantized value of the previous channel formed in block 675 of the previous loop, or in block 668 for CC = 2.

Block 674 limits this channel differential bit value to a -8 to +7 maximum. By restricting the bit value and quantizing the energy value, the range of adjacent channel differences becomes -12 dB/+10.5 dB. Although different applications may require different quantization values or bit limits, our results indicate these values sufficient for our application. Furthermore, since the limited channel difference is a four-bit signed number, two values per byte may be stored. Hence, the limiting and quantization procedures described here substantially reduce the amount of required data storage.

However, if the limited and quantized values of each differential were not used to form the next channel differential, a significant reconstruction error could result. Block 675 takes this error into account by reconstructing each channel differential from quantized and limited data before forming the next channel differential. The internal variable RQV is formed for each channel by the equation:

Channel(CC)RQV = CH(CC-1)RQV + CH(CC)differential

where CH(CC-1)RQV is the reconstructed quantized value of the previous channel differential. Hence, the use of the RQV variable inside the differential encoding loop prevents quantization errors from propagating to subsequent channels.

Block 676 outputs the quantized/limited channel differential to the template memory such that the difference is stored in two values per byte (see Figure 6c). Block 677 tests to see if all the channels have been encoded. If channels remain, the procedure repeats with block 670. If the channel count CC equals the channel total CT, the frame count FC is incremented in block 678 and tested in block 663 as before.

The following calculations illustrate the reduced data rate that can be achieved with the present invention. Feature extractor 312 generates an 8-bit logarithmic channel energy value for each of the 14 channels, wherein the least significant bit represents three-eights of a dB. Hence, one frame of raw word data applied to data reducer block 322 comprises 14 bytes of data, at 8 bits per byte, at 100 frames per second, which equals 11,200 bits per second.

After the energy normalization and segmentation/compression procedures have been performed, 16 bytes of data per frame are required. (One byte for each of the 14 channels, one byte for the average frame energy AVGENG, and one byte for the repeat count.) Thus, the data rate can be calculated as 16 bytes of data at 8 bits per byte, at 100 frames per second, and assuming an average of 4 frames per repeat count, gives 3200 bits per second.

After the differential encoding process of block 430 is completed, each frame of template memory 160 appears as shown in the reduced data format of Figure 6c. The repeat count is stored in byte 1. The quantized, energy-normalized channel one data is stored in byte 2. Bytes 3 through 9 have been divided such that two channel differences are stored in each byte. In other words, the differentially encoded channel 2 data is stored in the upper nibble of byte 3, and that of channel 3 is stored in the lower nibble of the same byte. The channel 14 differential is stored in the upper nibble of byte 9, and the average frame energy, AVGENG, is stored in the lower nibble of byte 9. At 9 bytes per frame of data, at 8 bits per byte, at 100 frames per second, and assuming an average repeat count of 4, the data rate now equals 1800 bits per second.

Hence, differential encoding block 430 has reduced 16 bytes of data into 9. If the repeat count values lie between 2 and 15, then the repeat count may also be stored in a four-bit nibble. One may then rearrange the repeat count data format to further reduce storage requirements to 8.5 bytes per frame. Moreover, the data reduction process has also reduced the data rate by at least a factor of six (11,200 to 1800). Consequently, the complexity and storage requirements of the speech recognition system are dramatically reduced, thereby allowing for an increase in speech recognition vocabulary.

## 3. Decoding Algorithm

Referring to Figure 7a, shown is an improved word model having frames 720 combined into 3 average frames 722, as discussed with block 420 in Figure 4a. Each average frame 722 is depicted as a state in a word model. Each state contains one or more substates. The number of substates is dependent on the number of frames combined to form the state. Each substate has an associated distance accumulator for accumulating similarity measures, or distance scores between input frames and the average frames. Implementation of this improved word model is subsequently discussed with Figure 7b.

Figure 7b shows block 120 from Figure 3 expanded to show specific detail including its relationship with template memory 160. The speech recognizer 326 is expanded to include a recognizer control block 730, a word model decoder 732, a distance ram 734, a distance calculator 736 and a state decoder 738. The template decoder 328 and template memory are discussed immediately following discussion of the speech recognizer 326.

The recognizer control block 730 is used to coordinate the recognition process. Coordination includes endpoint detection (for isolated word recognition), tracking best accumulated distance scores of the word models, maintenance of link tables used to link words (for connected or continuous word recognition), special distance calculations which may be required by a specific recognition process and initializing the distance ram 734. The recognizer control may also buffer data from the acoustic processor. For each frame of input speech, the recognizer updates all active word templates in the template memory. Specific requirements of the recognizer control 730 are discussed by Bridle, Brown and Chamberlain in a paper entitled "An Algorithm for Connected Word Recognition", Proceedings of the 1982 IEEE Int. Conf. on Acoustics, Speech and Signal Processing, pp. 899-902. A corresponding control processer used by the recognizer control block is decribed by Peckham, Green, Canning and Stephens in a paper entitled "A Real-Time Hardware Continuos Speech Recognition System", Proceedings of the 1982 IEEE Int. Conf. on Acoustics, Speech and Signal Processing, pp. 863-866.

The distance ram 734 contains accumulated distances used for all substates current to the decoding process. If beam decoding is used, as decribed by B. Lowerre in "The Harpy Speech Recognition System" Ph. D. Dissertation, Computer Science Dept., Carnegie-Mellon University 1977, then the distance ram 734 would also contain flags to identify which substates are currently active. If a connected word recognition process is used, as described in "An Algorithm for Connected Word Recognition", supra, then the distance ram 734 would also contain a linking pointer for each substate.

The distance calculator 736 calculates the distance between the currrent input frame and the state being processed. Distances are usually calculated according to the type of feature data used by the system to represent the speech. Bandpass filtered data may use Euclidean or Chebychev distance calculations as described in "The Effects of Selected Signal Processing Techniques on the Performance of a Filter-Bank-Based Isolated Word Recognizer" B.A. Dautrich, L.R, Rabiner, T.B. Martin, Bell System Technical Journal, Vol. 62, No. 5, May-June, 1983 pp. 1311-1336. LPC data may use log-likelihood ratio distance calculation, as described by F. Itakura in "Minimum Prediction Residual Principle Applied to Speech Recognition", IEEE Trans. Acoustics, Speech and Signal Processing, vol. ASSP-23, pp. 67-72, Feb. 1975. The present embodiment uses filtered data, also referred to as channel bank information; hence either Chebychev or Euclidean calculations would be appropriate.

The state decoder 738 updates the distance ram for each currently active state during the processing of the input frame. In other words, for each word model processed by the word model decoder 732, the state decoder 738 updates the required accumulated distances in the distance ram 734. The state decoder also makes use of the distance between the input frame and the current state determined by the distance calculator 736 and, of course, the template memory data representing the current state.

In Figure 7c, steps performed by the word model decoder 732, for processsing each input frame, are shown in flowchart form. A number of word searching techniques can be used to coordinate the decoding process, including a truncated searching technique, such as Beam Decoding, described by B. Lowerre in "The Harpy Speech Recognition System" Ph.d. Dissertation, Computer Science Dept., Carnegie-Mellon University 1977. It should be noted that implementing a truncated search technique requires the speech recognizer control 730 to keep track of threshold levels and best accumulated distances.

At block 740 of Figure 7c, three variables are extracted from the recognizer control (block 730 of Figure 7b). The three variables are PCAD, PAD and Template PTR. Template PTR is used to direct the word model decoder to the correct word template. PCAD represents the accumulated distance from the previous state. This is the distance which is accumulated, exiting from the previous state of the word model, in sequence.

PAD represents the previous accumulated distance, although not necessarily from the previous contiguous state. PAD may differ from PCAD when the previous state has a minimum dwell time of 0, i.e., when the previous state may be skipped all together.

In an isolated word recignition system PAD and PCAD would typically be initialized to 0 by the recognizer control. In a connected or continuous word recognization system the initial values of PAD and PCAD may be determined from outputs of other word models.

In block 742 of Figure 7c, the state decoder performs the decoding function for the first state of a particular word model. The data representing the state is identified by the Template PTR provided from the recognizer control. The state decoder block is discussed in detail with Figure 7d.

A test is performed in block 744 to determine if all states of the word model have been decoded. If not, flow returns back to the state decoder, block 742, with an updated Template PTR. If all states of the word model have been decoded, then accmumulated distances, PCAD and PAD, are returned to the recognizer control at block 748. At this point, the recognizer control would typically specify a new word model to decode. Once all word models have been processed it should start processing the next frame of data from the acoustic processor. For an isolated word recognition system when the last frame of input is decoded, PCAD returned by the word model decoder for each word model would represent the total accumulated distance for matching the input utterence to that word model. Typically, the word model with the lowest total accumulated distance would be chosen as the one represented by the utterence which was recognized. Once a template match has been determined, this information is passed to control unit 334.

Now refering to Figure 7d, shown is a flowchart for performing the actual state decoding for each state of each word model, i.e., block 742 of Figure 7c expanded. The accumulated distances, PCAD and PAD, are passed along to block 750. At block 750, the distance from the word model state to the input frame is computed and stored as a variable called IFD, for input frame distance.

The maxdwell for the state is transferred from template memory, block 751. The maxdwell is determined from the number of frames which are combined in each average frame of the word template and is equivalent to the number of substates in the state. In fact, this system defines the maxdwell as the number of frames which are combined. This is because during word training, the feature extracter (block 310 of Figure 3) samples the incoming speech at twice the rate it does during the recognition process. Setting maxdwell equal to the number of frames averaged allows a spoken word to be matched to a word model when the word spoken during recognition is up to twice the time length of the word represented by the template.

The mindwell for each state is determined during the state decoding process. Since only the state's maxdwell is passed to the state decoder algorithm, mindwell is calculated as the integer part of maxdwell divided by 4 (block 752). This allows a spoken word to be matched to a word model when the word spoken during recognition is half the time length of the word represented by the template.

A dwell counter, or substate pointer, i, is initialized in block 754 to indicate the current dwell count being processed. Each dwell count is referred to as a substate. The maximum number of substates for each state is defined according to maxdwell, as previously discussed. In this embodiment, the substates are processed in reverse order to facilitate the decoding process. Accordingly, since maxdwell is defined as the total number of substates in the state, "i" is initialy set equal to maxdwell.

In block 756, a temporary accumulated distance, TAD, is set equal to substate i's accumulated distance, referred to as IFAD(i), plus the current input frame distance, IFD. The accumulated distance is presumed to have been updated from the previously processed input frame, and stored in distance ram, block 734 from Figure 7b. IFAD is set to 0 prior to the initial input frame of the recognition process for all substates of all word models.

The substate pointer is decremented at block 758. If the pointer has not reached 0, block 760,the substate's new accumulated distance, IFAD(i + 1), is set equal to the accumulated distance for the previous substate, IFAD(i), plus the current input frame distance, IFD, block 762. Otherwise, flow proceeds to block 768 of Figure 7e.

A test is performed in block 764, to determine whether the state can be exited from the current substate, i.e. if "i" is greater or equal to mindwell. Until "i" is less than Mindwell, the temporary accumulated distance, TAD, is updated to the minimum of either the previous TAD or IFAD(i + 1), block 766. In other words, TAD is defined as the best accumulated distance leaving the current state.

Continuing on to block 768 of Figure 7e, the accumulated distance for the first substate is set to the best accumulated distance entering the state which is PAD.

A test is then performed to determine if mindwell for the current state is 0, block 770. A mindwell of zero indicates that the current state may be skipped over to yield a more accurate match in the decoding of this word template. If mindwell for the state is not zero, PAD is set equal to the the temporary accumulated distance, TAD, since TAD contains the best accumulated distance out of this state, block 772. If mindwell is zero, PAD is set as the minimum of either the previous state's accumulated distance out, PCAD, or the best accumulated distance out of this state, TAD, block 774. PAD represents the best accumulated distance allowed to enter the next state.

In block 776, the previous contiguous accumulated distance, PCAD, is set equal to the best accumulated distance leaving the current state, TAD. This variable is need to complete PAD for the following state if that state has a mindwell of zero. Note, the minimum allowed maxwell is 2, so that 2 adjacent states can never both be skipped.

Finally, the distance ram pointer for the current state is updated to point to the next state in the word model, block 778. This step is required since the substates are decoded from end to beginning for a more efficient algorithm.

The table shown in appendix A illustrates the flowchart of Figures 7c, 7d and 7e applied in an example where an input frame is processed through a word model (similar to Fig. 7a) with 3 states, A, B and C. In the example, it is presumed that previous frames have already been processed. Hence, the table includes a column showing "old accumulated distances (IFAD)" for each substate in states A, B and C.

Above the table, information is provided which will be referenced as the example develops. The 3 states have maxdwells of 3, 8 and 4 respectively for A, B and C. The mindwells for each state are shown in the table as 0, 2 and 1 respectively. It should be noted that these have been calculated, according to block 752 of Figure 7d, as the integer part of Maxdwell/4. Also provided at the top of the table is the input frame distance (IFD) for each state according to block 750 of Figure 7d. This information could as well have been shown in the table, but it has been excluded to shorten the table and simplify the example. Only pertinent blocks are shown at the left side of the table.

The example begins at block 740 of Figure 7c. The previous accumulated distances, PCAD and PAD, and the template pointer, which points to the first state of the word template being decoded, are received from the recognizer control. Accordingly, in the first row of the table, state A is recorded along with PCAD and PAD.

Moving onto Figure 7d, the distance (IFD) is calculated, maxdwell is retrieved from template memory, mindwell is calculated and the substate pointer, "i", is initialized. Only the initialization of the pointer is needed to be shown in the table since maxdwell, mindwell and IFD information is already provided above the table. The second line shows i set equal to 3, the last substate, and the previous accumulated distance is retrieved from the distance ram.

At block 756, the temporary accumulated distance, TAD, is calculated and recorded on the third line of the table.

The test performed at block 760 is not recorded in the table, but the fourth line of the table shows flow moving to block 762 since all substates have not been processed.

The fourth line of the table shows both the decrement of the substate pointer, block 758, and the calculation of the new accumulated distance, block 762. Hence, recorded is $i = 2$, the corresponding old IFAD and the new accumulated distance set at 14, i.e. the previous accumulated distance for the current substate plus the input frame distance for the state.

The test performed at block 764 results in the affirmative. The fifth line of the table shows the temporary accumulated distance, TAD, updated as the minimum of either the current TAD or IFAD(3). In this case, it is the latter, TAD $= 14$.

Flow returns to block 758. The pointer is decremented and the accumulated distance for the second substate is calculated. This is shown on line six.

The first substate is processed similarly, at which point i is detected as equal to 0, and flow proceeds from block 760 to block 768. At block 768, IFAD is set for the first substate according to PAD, the accumulated distance into the current state.

At block 770, the mindwell is tested against zero. If it equals zero, flow proceeds to block 774 where PAD is determined from the minimum of the temporary accumulated distance, TAD, or the previous accumulated distance, PCAD, since the current state can be skipped due to the zero mindwell. Since mindwell = 0 for state A PAD is set to mindwell of 9(TAD) and 5(PCAD) which is 5. PCAD is subsequently set equal to TAD, block 776.

Finally, the first state is completely processed with the distance ram pointer updated to the next state in the word model, block 778.

Flow returns to the flowchart in Figure 7c to update the template pointer and back to Figure 7d, block 750, for the next state of the word model. This state is processed in a similar manner as the former, with the exceptions that PAD and PCAD, 5 and 9 respectively, are passed from the former state and mindwell for this state is not equal to zero, and block 766 will not be executed for all substates. Hence, block 772 is processed rather than block 774.

The third state of the word model is processed along the same lines as the first and second. After completing the third state, the flowchart of Figure 7c is returned to with the new PAD and PCAD variables for the recognizer control.

In summary, each state of the word model is updated one substate at a time in reverse order. Two variables are used to carry the most optimal distance from one state to the next. The first, PCAD, carries the minimum accumulated distance from the previous contiguous state. The second variable, PAD, carries the minmum accumulated distance into the current state and is either the minimum accumulated distance out of the previous state (same as PCAD) or if the previous state has a mindwell of 0, the minimum of the minimum accumulated distance out of the previous state and the minimum accumulated distance out of the second previous state. To determine how many substates to process, mindwell and maxdwell are calculated according to the number of frames which have been combined in each state.

The flowcharts of Figures 7c, 7d and 7e allow for an optimal decoding of each data reduced word template. By decoding the designated substates in reverse order, processing time is minimized. However, since real time processing requires that each word template must be accessed quickly, a special arrangement is required to readily extract the data reduced word templates.

The template decoder 328 of Figure 7b is used to extract the specially formatted word templates from the template memory 160 in a high speed fashion. Since each frame is stored in template memory in the differential form of Figure 6b, the template decoder 328 utilizes a special accessing technique to allow the word model decoder 732 to access the encoded data without excessive overhead.

The word model decoder 732 addresses the template memory 160 to specify the appropriate template to decode. The same information is provided to the template decoder 328, since the address bus is shared by each. The address specifically points to a average frame in the template. Each frame represents a state in the word model. For every state requiring decoding, the address typically changes.

Refering again to the reduced data format of Figure 6b, once the address of a word template frame is sent out, the template decoder 328 accesses bytes 3 through 9 in a nibble access. Each byte is read as 8-bits and then separated. The lower four bits are placed in a temporary register with sign extension. The upper four bits are shifted to the lower four bits with sign extension and are stored in another temporary register. Each of the differential bytes are retrieved in this manner. The repeat count and the channel one data are retrieved in a normal 8-bit data bus access and temporarily stored in the template decoder 328. The repeat count (maxdwell) is passed directly to the state decoder while the channel one data and channel 2-14 differential data (separated and expanded to 8 bits as just described) are differentially decoded according to the flowchart in Figure 8b infra before being passed to distance calculator 736.

### 4. Data Expansion and Speech Synthesis

Referring now to Figure 8a, a detailed block diagram of data expander 346 of Figure 3 is illustrated. As will be shown below, data expansion block 346 performs the reciprocal function of data reduction block 322 of Figure 3. Reduced word data, from template memory 160, is applied to differential decoding block 802. The decoding function performed by block 802 is essentially the inverse algorithm performed by differential encoding block 430 of Figure 4a. Briefly stated, the differential decoding algorithm of block 802 "unpacks" the reduced word feature data stored in template memory 160 by adding the present channel difference to the previous channel data. This algorithm is fully described in the flowchart of Figure 8b.

Next, energy denormalization block 804 restores the proper energy contour to the channel data by effecting the inverse algorithm performed in energy normalization block 410 of Figure 4a. The denormalization procedure adds the average energy value of all channels to each energy-normalized channel value stored in the template. The energy denormalization algorithm of block 804 is fully described in the detailed flowchart of Figure 8c.

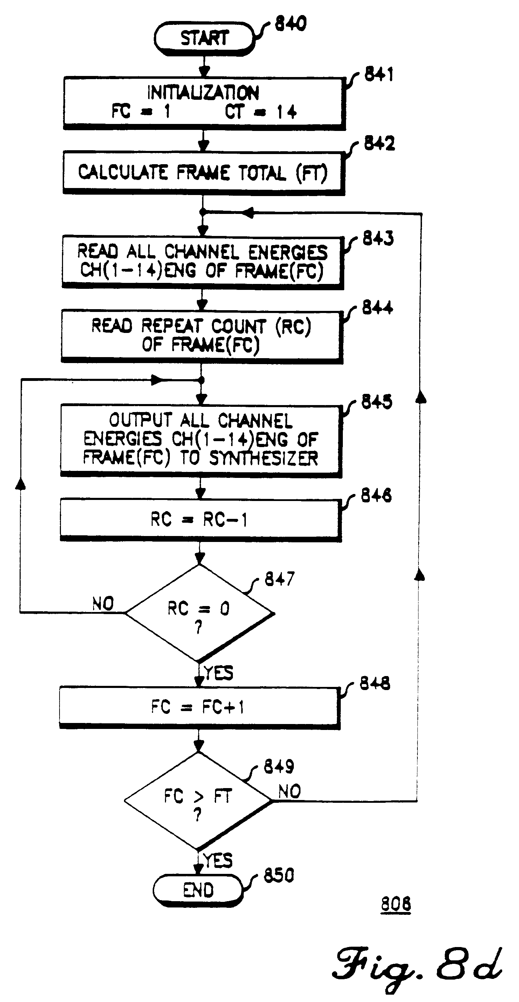

Finally, frame repeating block 806 determines the number of frames compressed into a single frame by segmentation/compression block 420 of Figure 4a, and performs a frame-repeat function to compensate accordingly. As the flowchart of Figure 8d illustrates, frame repeating block 806 outputs the same frame data "R" number of times, where R is the prestored repeat count obtained from template memory 160. Hence, reduced word data from the template memory is expanded to form "unpacked" word data which can be interpreted by the speech synthesizer.

The flowchart of Figure 8b illustrates the steps performed by differential decoding block 802 of data expander 346. Following start block 810, block 811 initializes the variables to be used in later steps. Frame count FC is initialized to one to correspond to the first frame of the word to be synthesized, and channel total CT is initialized to the total number of channels in the channel-bank synthesizer (14 in the present embodiment).

Next, the frame total FT is calculated in block 812. Frame total FT is the total number of frames in the word obtained from the template memory. Block 813 tests whether all frames of the word have been differentially decoded. If the present frame count FC is greater than the frame total FT, no frames of the word would be left to decode, so the decoding process for that word will end at block 814. If, however, FC is not greater than FT, the differential decoding process continues with the next frame of the word. The test of block 813 may alternatively be performed by checking a data flag (sentinel) stored in the template memory to indicate the end of all channel data.

The actual differential decoding process of each frame begins with block 815. First, the channel count CC is set equal to one in block 815, to determine the channel data to be read first from template memory 160. Next, a full byte of data corresponding to the normalized energy of channel 1 is read from the template in block 816. Since channel 1 data is not differentially encoded, this single channel data may be output (to energy denormalization block 804) immediately via block 817. The channel counter CC is then incremented in block 818 to point to the location of the next channel data. Block 819 reads the differentially encoded channel data (differential) for channel CC into an accumulator. Block 820 then performs the differential decoding function of forming channel CC data by adding channel CC-1 data to the channel CC differential. For example, if CC = 2, then the equation of block 820 is:

Channel 2 data = Channel 1 data + Channel 2 Differential.

Block 821 then outputs this channel CC data to energy denormalization block 804 for further processing. Block 822 tests to see whether the present channel count CC is equal to the channel total CT, which would indicate the end of a frame of data. If CC is not equal to CT, then the channel count is incremented in block 818 and the differential decoding process is performed upon the next channel. If all channels have been decoded (when CC equals CT), then the frame count FC is incremented in block 823 and compared in block 813 to perform an end-of-data test. When all frames have been decoded, the differential decoding process of data expander 346 ends at block 814.

Figure 8c illustrates the sequence of steps performed by energy denormalization block 804. After starting at block 825, initialization of the variables takes place in block 826. Again, the frame count FC is initialized to one to correspond to the first frame of the word to be synthesized, and the channel total CT is initialized to the total number of channels in the channel bank synthesizer (14 in this case). The frame total FT is calculated in block 827 and the frame count is tested in block 828, as previously done in blocks 812 and 813. If all frames of the word have been processed (FC greater than FT), the sequence of steps ends at block 829. If, however, frames still need to be processed (FC not greater than FT), then the energy denormalization function is performed.

In block 830, the average frame energy AVGENG is obtained from the template for frame FC. Block 831 then sets the channel count CC equal to one. The channel data, formed from the channel differential in differential decoding block 802 (block 820 of Figure 8b), is now read in block 832. Since the frame is normalized by subtracting the average energy from each channel in energy normalization block 410 (Figure 4), it is similarly restored (denormalized) by adding the average energy back to each channel. Hence, the channel is denormalized in block 833 according to the formula shown. If, for example, CC = 1, then the equation of block 833 is:

Channel 1 energy = Channel 1 data + average energy.

This denormalized channel energy is then output (to frame repeating block 806) via block 834. The next channel is obtained by incrementing the channel count in block 835, and testing the channel count in block 836 to see if all channels have been denormalized. If all channels have not yet been processed (CC not greater than CT), then the denormalization procedure repeats starting with block 832. If all channels of the frame have been processed (CC greater than CT), then the frame count is incremented in block 837, and tested in block 828 as before. In review, Figure 8c illustrates how the channel energies are denormalized by adding the average energy back to each channel.

Referring now to Figure 8d, the sequence of steps performed by frame repeating block 806 of Figure 8a is illustrated in the flowchart. Again, the process starts at block 840 by first initializing the frame count FC to one and the channel total CT to 14 at block 841. In block 842, the frame total, FT, representing the number of frames in the word, is calculated as before.

Unlike the previous two flowcharts, all channel energies of the frame are simultaneously obtained in block 843, since the individual channel processing has now been completed. Next, the repeat count RC of frame FC is then read from the template data in block 844. This repeat count RC corresponds to the number of frames combined into a single frame from the data compression algorithm performed in segmentation/compression block 420 of Figure 4. In other words, the RC is the "maxdwell" of each frame. The repeat count is now utilized to output the particular frame "RC" number of times.

Block 845 outputs all the channel energies CH(1-14)ENG of frame FC to the speech synthesizer. This represents the first time the "unpacked" channel energy data is output. The repeat count RC is then decremented by one in block 846. For example, if frame FC was not previously combined, the stored value of RC would equal one, and the decremented value of RC would equal zero. Block 847 then tests the repeat count. If RC is not equal to zero, then the particular frame of channel energies is again output in block 845. RC would again be decremented in block 846, and again tested in block 847. When RC is decremented to zero, the next frame of channel data is obtained. Thus, the repeat count RC represents the number of times the same frame is output to the synthesizer.

To obtain the next frame, the frame count FC is incremented in block 848, and tested in block 849. If all the frames of the word have been processed, the sequence of steps corresponding to frame repeating block 806 ends at block 850. If more frames need to be processed, the frame repeating function continues with block 843.

As we have seen, data expander block 346 essentially performs the inverse function of "unpacking" the stored template data which has been "packed" by data reduction block 322. It is to be noted that the separate functions of blocks 802, 804, and 806 may also be performed on a frame-by-frame basis, instead of the word-by-word basis illustrated in the flowcharts of Figures 8b, 8c, and 8d. In either case, it is the combination of data reduction, reduced template format, and data expansion techniques which allows the present invention to synthesize intelligible speech from speech recognition templates at a low data rate.

As illustrated in Figure 3, both the "template" word voice reply data, provided by data expander block 346, and the "canned" word voice reply data, provided by reply memory 344, are applied to channel bank speech synthesizer 340. Speech synthesizer 340 selects one of these data sources in response to a command signal from control unit 334. Both data sources 344 and 346 contain prestored acoustic feature information corresponding to the word to be synthesized.

This acoustic feature information comprises a plurality of channel gain values (channel energies), each representative of the acoustic energy in a specified frequency bandwidth, corresponding to the bandwidths of feature extractor 312. There is, however, no provision in the reduced template memory format to store other speech synthesizer parameters such as voicing or pitch information. This is due to the fact that voicing and pitch information is not normally provided to speech recognition processor 120. Therefore, this information is usually not retained primarily to reduce template memory requirements. Depending on the particular hardware configuration, reply memory 344 may or may not provide voicing and pitch information. The following channel bank synthesizer description assumes that voicing and pitch information are not stored in either memory. Hence, channel bank speech synthesizer 340 must synthesize words from a data source which is absent voicing and pitch information. One important aspect of the present invention directly addresses this problem.

Figure 9a illustrates a detailed block diagram of channel bank speech synthesizer 340 having N channels. Channel data inputs 912 and 914 represent the channel data outputs of reply memory 344 and data expander 346, respectively. Accordingly, switch array 910 represents the "data source decision" provided by device controller unit 334. For example, if a "canned" word is to be synthesized, channel data inputs 912 from reply memory 344 are selected as channel gain values 915. If a template word is to be synthesized, channel data inputs 914 from data expander 346 are selected. In either case, channel gain values 915 are routed to low-pass filters 940.

Low-pass filters 940 function to smooth the step discontinuities in frame-to-frame channel gain changes before feeding them to the modulators. These gain smoothing filters are typically configured as second-order Butterworth lowpass filters. In the present embodiment, lowpass filters 940 have a -3 dB cutoff frequency of approximately 28 Hz.

Smoothed channel gain values 945 are then applied to channel gain modulators 950. The modulators serve to adjust the gain of an excitation signal in response to the appropriate channel gain value. In the present embodiment, modulators 950 are divided into two predetermined groups: a first predetermined group (numbered 1 through M) having a first excitation signal input; and a second group of modulators (numbered $M+1$ through N) having a second excitation signal input. As can be seen from Figure 9a, the first excitation signal 925 is output from pitch pulse source 920, and the second excitation signal 935 is output from noise source 930. These excitation sources will be described in further detail in the following figures.

Speech synthesizer 340 employs the technique called "split voicing" in accordance with the present invention. This technique allows the speech synthesizer to reconstruct speech from externally-generated acoustic feature information, such as channel gain values 915, without using external voicing information. The preferred embodiment does not utilize a voicing switch to distinguish between the pitch pulse source (voiced excitation) and the noise source (unvoiced excitation) to generate a single voiced/unvoiced excitation signal to the modulators. In contrast, the present invention "splits" the acoustic feature information provided by the channel gain values into two predetermined groups. The first predetermined group, usually corresponding to the low frequency channels, modulates the voiced excitation signal 925. A second predetermined group of channel gain values, normally corresponding to the high frequency channels, modulates the unvoiced excitation signal 935. Together, the low frequency and high frequency channel gain values are individually bandpass filtered and combined to generate a high quality speech signal.

It has been found that a "9/5 split" (M = 9) for a 14-channel synthesizer (N = 14) has provided excellent results for improving the quality of speech. However, it will be apparent to those skilled in the art that the voiced/unvoiced channel "split" can be varied to maximize the voice quality characteristics in particular synthesizer applications.

Modulators 1 through N serve to amplitude modulate the appropriate excitation signal in response to the acoustic feature information of that particular channel. In other words, the pitch pulse (buzz) or noise (hiss) excitation signal for channel M is multiplied by the channel gain value for channel M. The amplitude modification performed by modulators 950 can readily be implemented in software using digital signal processing (DSP) techniques. Similarly, modulators 950 may be implemented by analog linear multipliers as known in the art.

Both groups of modulated excitation signals 955 (1 through M, and M + 1 through N) are then applied to bandpass filters 960 to reconstruct the N speech channels. As previously noted, the present embodiment utilizes 14 channels covering the frequency range 250 Hz to 3400 Hz. Additionally, the preferred embodiment utilizes DSP techniques to digitally implement in software the function of bandpass filters 960. Appropriate DSP algorithms are described in chapter 11 of L.R. Rabiner and B. Gold, Theory and Application of Digital Signal Processing, (Prentice Hall, Englewood Cliffs, N.J., 1975).

The filtered channel outputs 965 are then combined at summation circuit 970. Again, the summing function of the channel combiner may be implemented either in software, using DSP techniques, or in hardware, utilizing a summation circuit, to combine the N channels into a single reconstructed speech signal 975.

An alternate embodiment of the modulator/bandpass filter configuration 980 is shown in Figure 9b. This figure illustrates that it is functionally equivalent to first apply excitation signal 935 (or 925) to bandpass filter 960, and then amplitude modulate the filtered excitation signal by channel gain value 945 in modulator 950. This alternate configuration 980' produces the equivalent channel output 965, since the function of reconstructing the channels is still achieved.

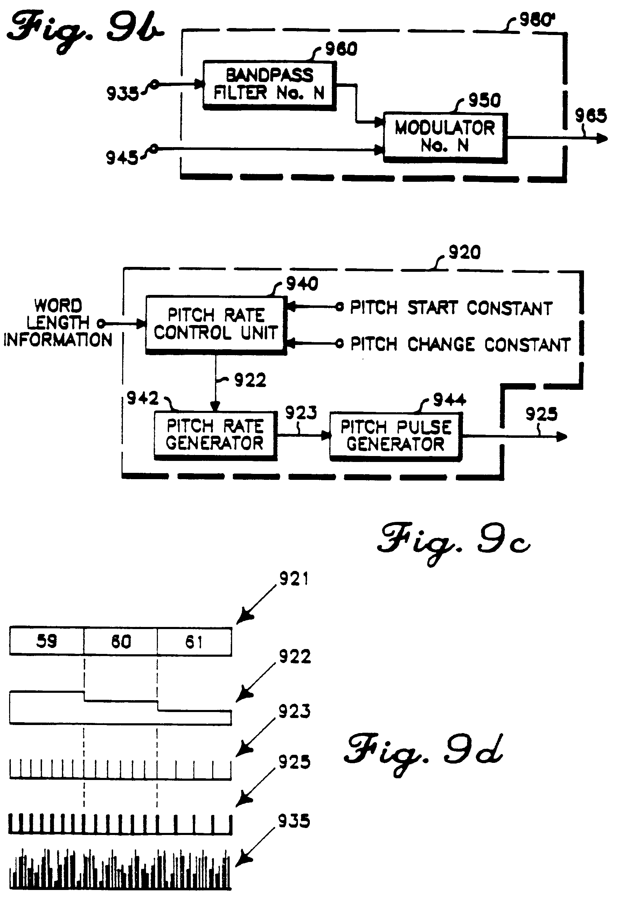

Noise source 930 produces unvoiced excitation signal 935, called "hiss". The noise source output is typically a series of random amplitude pulses of a constant average power, as illustrated by waveform 935 of Figure 9d. Conversely, pitch pulse source 920 generates a pulse train of voiced excitation pitch pulses, also of a constant average power, called "buzz". A typical pitch pulse source would have its pitch pulse rate determined by an external pitch period $f_0$. This pitch period information, determined from an acoustic analysis of the desired synthesizer speech signal, is normally transmitted along with the channel gain information in a vocoder application, or would be stored, along with the voiced/unvoiced decision and channel gain information, in a "canned" word memory. However, as noted above, there is no provision in the reduced template memory format of the preferred embodiment to store all of these speech synthesizer parameters, since they are not all required for speech recognition. Hence, another aspect of the present invention is directed toward providing a high quality synthesized speech signal without prestored pitch information.

Pitch pulse source 920 of the preferred embodiment is shown in greater detail in Figure 9c. It has been found that a significant improvement in synthesized voice quality can be achieved by varying the pitch pulse period such that the pitch pulse rate decreases over the length of the word synthesized. Therefore, excitation signal 925 is preferably comprised of pitch pulses of a constant average power and of a predetermined variable rate. This variable rate is determined as a function of the length of the word to be synthesized, and as a function of empirically-determined constant pitch rate changes. In the present embodiment, the pitch pulse rate linearly decreases on a frame-by-frame basis over the length of the word. However, in other applications, a different variable rate may be desired to produce other speech sound characteristics.

Referring now to Figure 9c, pitch pulse source 920 is comprised of pitch rate control unit 940, pitch rate generator 942, and pitch pulse generator 944. Pitch rate control unit 940 determines the variable rate at which the pitch period is changed. In the preferred embodiment, the pitch rate decrease is determined from a pitch change constant, initialized from a pitch start constant, to provide pitch period information 922. The function of pitch rate control unit 940 may be performed in hardware by a programmable ramp generator, or in software by the controlling microcomputer. The operation of control unit 940 is fully described in conjunction with the next figure.

Pitch rate generator 942 utilizes this pitch period information to generate pitch rate signal 923 at regularly spaced intervals. This signal may be impulses, rising edges, or any other type of pitch pulse period conveying signal. Pitch rate generator 942 may be a timer, a counter, or crystal clock oscillator which provides a pulse train equal to pitch period information 922. Again, in the present embodiment, the function of pitch rate generator 942 is performed in software.

Pitch rate signal 923 is used by pitch pulse generator 944 to create the desired waveform for pitch pulse excitation signal 925. Pitch pulse generator 944 may be a hardware waveshaping circuit, a monoshot clocked by pitch rate signal 923, or, as in the present embodiment, a ROM look-up table having the desired waveform information. Excitation signal 925 may exhibit the waveform of impulses, a chirp (frequency swept sine wave) or any other broadband waveform. Hence, the nature of the pulse is dependent upon the particular excitation signal desired.

Since excitation signal 925 must be of a constant average power, pitch pulse generator 944 also utilizes the pitch rate signal 923, or the pitch period 922, as an amplitude control signal. The amplitude of the pitch pulses are scaled by a factor proportional to the square root of the pitch period to obtain a constant average power. Again, the actual amplitude of each pulse is dependent upon the nature of the desired excitation signal.

The following discussion of Figure 9d, as applied to pitch pulse source 920 of Figure 9c, describes the sequence of steps taken in the preferred embodiment to produce the variable pitch pulse rate. First, the word length WL for the particular word to be synthesized is read from the template memory. This word length is the total number of frames of the word to be synthesized. In the preferred embodiment, WL is the sum of all repeat counts for all frames of the word template. Second, the pitch start constant PSC and pitch change constant PCC are read from a predetermined memory location in the synthesizer controller. Third, the number of word divisions are calculated by dividing the word length WL by the pitch change constant PCC. The word division WD indicates how many consecutive frames will have the same pitch value. For example, waveform 921 illustrates a word length of 3 frames, a pitch start constant of 59, and a pitch change constant of 3. Thus, the word division, in this simple example, is calculated by dividing the word length (3) by the pitch change constant (3), to set the number of frames between pitch changes equal to one. A more complicated example would be if WL = 24 and PCC = 4, then the word divisions would occur every 6 frames.

The pitch start constant of 59 represents the number of sample times between pitch pulses. For example, at an 8 kHz sampling rate, there would be 59 sample times (each 125 microseconds in duration) between pitch pulses. Therefore, the pitch period would be 59 x 125 microseconds = 7.375 milliseconds or 135.6 Hz. After each word division, the pitch start constant is incremented by one (i.e. 60 = 133.3 Hz, 61 = 131.1 Hz) such that the pitch rate decreases over the length of the word. If the word length was longer, or the pitch change constant was shorter, several consecutive frames would have the same pitch value. This pitch period information is represented in Figure 9d by waveform 922. As waveform 922 illustrates, the pitch period information may be represented in a hardware sense by changing voltage levels, or in software by different pitch period values.

When pitch period information 922 is applied to pitch rate generator 942, pitch rate signal waveform 923 is produced. Waveform 923 generally illustrates, in a simplified manner, that the pitch rate is decreasing at a rate determined by the variable pitch period. When the pitch rate signal 923 is applied to pitch pulse generator 944, excitation waveform 925 is produced. Waveform 925 is simply a waveshaped variation of waveform 923 having a constant average power. Waveform 935, representing the output of noise source 930 (hiss), illustrates the difference between periodic voiced and random unvoiced excitation signals.

As we have seen, the present invention provides a method and apparatus for synthesizing speech without voicing or pitch information. The speech synthesizer of the present invention employs the technique of "split voicing" and the technique of varying the pitch pulse period such that the pitch pulse rate decreases over the length of the word. Although either technique may be used by itself, the combination of split voicing and variable pitch pulse rate allows natural-sounding speech to be generated without external voicing or pitch information.

# APPENDIX A

Processing of one input frame for 3 states of a word model, states A, B and C.

State A: Maxdwell = 3, Mindwell = 0 (752-Fig. 7(d)), IFD = 7 (750-Fig. 7(d))
State B: Maxdwell = 8, Mindwell = 2 (752-Fig. 7(d)), IFD = 3 (750-Fig. 7(d))
State C: Maxdwell = 4, Mindwell = 1 (752-Fig. 7(d)), IFD = 5 (750-Fig. 7(d))

| BLK/Fig. | State/Substate | IN | | OUT | | Old IFAD(i) (Given) | NEW IFAD(i+1) | TAD |
|---|---|---|---|---|---|---|---|---|
| | | PAD | PCAD | PAD | PCAD | | | |
| 740/7(c) | A | 5 | 5 | | | | | |
| 754/7(d) | i=3 | | | | | $8_{(3)}$ | | |
| 756 | | | | | | | | $15=7+8$ |
| 758,762 | i=2 | | | | | $7_{(2)}$ | $14_{(3)}=7+7$ | |
| 766 | | | | | | | | 14 |
| 758,762 | i=1 | | | | | $2_{(1)}$ | $9_{(2)}=2+7$ | |
| 766 | | | | | | | | 9 |
| 758 | i=0 | | | | | | | |
| 768 | | | | | | | $5_{(1)}$ | |
| 774,776 | | | | 5 | 9 | | | |
| 778 | B | 5 | 9 | | | | | |
| 754 | i=8 | | | | | $5_{(8)}$ | | |
| 756 | | | | | | | | $8=3+5$ |
| 758,762 | i=7 | | | | | $9_{(7)}$ | $12_{(8)}=9+3$ | |
| 766 | | | | | | | | 8 |
| 758,762 | i=6 | | | | | $3_{(6)}$ | $6_{(7)}=3+3$ | 8 |
| 766 | | | | | | | | |
| 758,762 | i=5 | | | | | $8_{(5)}$ | $11_{(6)}=8+3$ | 6 |
| 766 | | | | | | | | |
| 758,762 | i=4 | | | | | $4_{(4)}$ | $7_{(5)}=4+3$ | 6 |
| 766 | | | | | | | | |
| 758,762 | i=3 | | | | | $4_{(3)}$ | $7_{(4)}=4+3$ | |
| 766 | | | | | | | | 6 |
| 758,762 | i=2 | | | | | $5_{(2)}$ | $8_{(3)}=5+3$ | |
| 766 | | | | | | | | 6 |
| 758,762 | i=1 | | | | | $2_{(1)}$ | $5_{(2)}=2+3$ | |
| 766 | | | | | | | | 6 |
| 758 | i=0 | | | | | | | |
| 768 | | | | | | | $5_{(1)}$ | |
| 772,776 | | | | 6 | 6 | | | |
| 778 | | 6 | 6 | | | | | |
| 754 | i=4 | | | | | $10_{(4)}$ | | |
| 756 | | | | | | | | $15=5+10$ |
| 758,762 | i=3 | | | | | $8_{(3)}$ | $13_{(4)}=8+5$ | |
| 766 | | | | | | | | 13 |
| 758,762 | i=2 | | | | | $6_{(2)}$ | $11_{(3)}=6+5$ | |
| 766 | | | | | | | | 11 |
| 758,762 | i=1 | | | | | $9_{(1)}$ | $14_{(2)}=9+5$ | |
| 766 | | | | | | | | 11 |
| 758 | i=0 | | | | | | | |
| 768 | | | | | | | $6_{(1)}$ | |
| 772,776 | | | | 11 | 11 | | | |
| 778 | | 11 | 11 | | | | | |
| 744/7(c) | | | | | | | | |
| 748 | | 11 | 11 | | | | | |

## Claims

1. An electronic device having a user interactive, user trained control system controlling a plurality of user-controlled device operating parameters upon the occurrence of a user-spoken command word and providing audible feedback to the user as to the device operating status, said control system

28

EP 0 255 523 B1

comprising:

an acoustic processor (110) for extracting acoustic features from a user spoken input speech, thereby producing word feature signals;

a training processor (170) for data reducing word feature signals, discarding pitch information, if any, thereby producing word recognition templates in a training mode of said device, and for storing said word recognition templates in memory (160);

a recognition processor (120) which is responsive, in the recognition mode of said device, to said word recognition templates and to user spoken input speech as preprocessed by said acoustic processor (110) for recognizing user spoken command words to produce device control data;

a device controller (130), responsive to said device control data for controlling said device operating parameters; and

a synthesis processor (140) for synthesizing reply speech to the user, said device being characterized in that said synthesis processor synthesises said reply speech from said speech recognition templates, and in that said synthesis processor includes a pitch source which substitutes pitch information (925) in place of and independent of said discarded pitch information in accordance with a predetermined rule set.

2. An electronic device according to claim 1 wherein the pitch information comprises constant average power variable rate pitch pulses, the rate variation of which is determined in accordance with the predetermined rule set.

3. An electronic device according to claim 2 wherein the rule set includes a rule wherein the variable rate of the pitch pulses is a function of the length of the word to be synthesized.

4. An electronic device according to claim 3 wherein the pitch source comprises:

pitch pulse rate control unit (940) for providing pitch period information which represents the rate of variation of the period of the pitch pulses using the value of the length of the word to be synthesised and a predetermined constant which represents the number of frames of a word having substantially the same pitch value;

pitch rate generator (942) for generating a pitch rate signal at regularly spaced intervals in dependence on said pitch period information; and

pitch pulse generator (944) for using the pitch rate signal to generate a waveform representing the pitch information (925) having constant average power.

5. An electronic device according to claim 1, 2, 3, or 4, wherein said device controller includes:

directory means for storing a plurality of telephone numbers;

dialing means for dialing telephone numbers obtained from said directory means in response to the recognition of at least one predetermined user-spoken command word; and

means for storing a telephone number in said directory means by voice command, the storage of which constitutes one of said plurality of operating parameters.

6. An electronic device according to any preceding claim, further comprising means for data expanding said word recognition templates for synthesis, thereby providing expanded word recognition templates, said synthesis processor using said expanded word recognition templates for synthesizing a speech reply signal.

7. An electronic device according to any preceding claim, wherein said electronic device is a radiotelephone.

8. An electronic device according to any preceding claim, wherein said electronic device is a radio transceiver, said control system controlling a plurality of user-controlled radio transceiver operating parameters upon a user-spoken command word and for providing audible feedback to the user as to the radio transceiver operating status, said radio transceiver comprising first coupling means for providing acoustic coupling of user-spoken input speech to said control means, thereby providing an input speech signal, and second coupling means for providing acoustic coupling of said speech reply signal from said control means to the user, thereby providing audible feedback to the user as to said radio transceiver present operating status.

29

9. A method of providing user-interactive control of electronic device operating parameters upon the occurrence of a user-spoken command word and creating audible feedback to the user as to the device operating status, said method comprising the steps of:

extracting acoustic features from a user spoken input speech signal, thereby producing word feature signals;

data reducing word feature signals and discarding pitch information, if any, thereby producing word recognition templates in a training mode of said device, and storing said word recognition templates in memory (160);

recognizing, in a recognition mode, user-spoken command words in response to said stored word templates and a user-spoken input speech signal to produce device control data;

controlling the device operating parameters in response to said control data; and

synthesizing reply speech to the user, the method being characterised in that said step of synthesizing reply speech synthesizes said reply speech from said stored word recognition templates and substitutes pitch information in place of and independent of said discarded pitch information in accordance with a predetermined rule set.

10. A method according to claim 9 wherein the pitch information comprises constant average power variable rate pitch pulses, the rate variation of which is determined in accordance with the predetermined rule set.

11. A method according to claim 10 wherein the rule set includes a rule wherein the variable rate of the pitch pulses is a function of the length of the word to be synthesized.

12. The method according to claim 9, 10 or 11 further comprising the step of storing a plurality of telephone numbers by voice command, the storage of which constitutes one of said plurality of operating parameters.

13. The method according to claim 9, 10, 11 or 12 wherein said data reducing step comprises the steps of:

normalising the energy data of the word feature signals;

segmenting the word feature signals;

combining selected segments to form clusters of segments; and

differential encoding of the word feature signals.

**Patentansprüche**

1. Elektronisches Gerät mit einem benutzerinteraktiven, benutzergeschulten Steuersystem, das bei dem Vorkommen eines vom Benutzer gesprochenen Befehlswortes eine Mehrzahl anwendergesteuerter Gerätebetriebsparameter steuert und das dem Anwender eine hörbare Rückmeldung bezüglich des Gerätebetriebszustandes zur Verfügung stellt, wobei das Steuersystem umfaßt:

einen Akustikprozessor (110) zum Extrahieren akustischer Merkmale aus einer benutzergesprochenen Eingabesprache, um dadurch Wortmerkmalsignale zu erzeugen;

einen Übungsprozessor (170) zur Datenreduktion der Wortmerkmalsignale, wobei, wenn vorhanden, die Tonlageinformation abgeworfen wird, um dadurch in einem Übungsmodus des Gerätes Worterkennungsmodelle zu erzeugen, und zum Speichern der Worterkennungsmodelle im Speicher (160);

einen Erkennungsprozesssor (120), der in dem Erkennungsmodus des Gerätes auf die Worterkennungsmodelle und auf die benutzergesprochene Eingabesprache, wie durch den Akustikprozessor (110) vorverarbeitet, anspricht, zum Erkennen benutzergesprochener Befehlswörter, um Gerätesteuerdaten zu erzeugen;

eine Gerätesteuereinheit (130), ansprechend auf die Gerätesteuerdaten, um die Gerätebetriebsparameter zu steuern, und

einen Syntheseprozessor (140) zum Synthetisieren der Antwortsprache für den Benutzer, wobei das Gerät dadurch gekennzeichnet ist, daß der Syntheseprozessor die Antwortsprache aus den Spracherkennungsmodellen synthetisiert, und dadurch, daß der Syntheseprozessor eine Tonlagenquelle umfaßt, die gemäß einem vorbestimmten Regelsatz die Tonlageinformation (925) anstelle von und unabhängig von der abgeworfenen Tonlageinformation einsetzt.

2. Elektronisches Gerät nach Anspruch 1, bei dem die Tonlageinformation Tonlagenimpulse mit konstanter mittlerer Leistung und variabler Folgefrequenz umfaßt, deren Folgefrequenzveränderung gemäß dem vorbestimmten Regelsatz bestimmt wird.

3. Elektronisches Gerät nach Anspruch 2, bei dem der Regelsatz eine Regel umfaßt, bei der die variable Folgefrequenz der Tonlagenimpulse eine Funktion der Länge des zu synthetisierenden Wortes ist.

4. Elektronisches Gerät nach Anspruch 2, bei dem die Tonlagenquelle umfaßt:
eine Tonlagenimpuls-Folgefrequenzsteuereinheit (940), um eine Tonlagenperiodeninformation bereitzustellen, die den Betrag der Veränderung der Periode der Tonlagenimpulse darstellt, wobei der Wert der Länge des zu synthetisierenden Wortes und eine vorbestimmte Konstante, die die Zahl der Rahmen eines Wortes mit im wesentlichen dem gleichen Tonlagenwert darstellt, verwendet werden;
einen Tonlagen-Folgefrequenzgenerator (942), um in Abhängigkeit von der Tonlagenperiodeninformation ein Tonlagen-Folgefrequenzsignal in gleichmäßig beabstandeten Intervallen zu erzeugen, und
einen Tonlagen-Impulsgenerator (944) zur Verwendung des Tonlagen-Folgefrequenzsignals, um eine Wellenform zu erzeugen, die die Tonlageninformation (925) mit konstanter mittlerer Leistung darstellt.

5. Elektronisches Gerät nach Anspruch 1, 2, 3 oder 4, bei dem die Gerätesteuereinheit umfaßt:
eine Verzeichniseinrichtung zum Speichern einer Mehrzahl von Telefonnummern;
eine Wähleinrichtung, um als Reaktion auf die Erkennung von wenigstens einem vorbestimmten benutzergesprochenen Befehlswort aus der Verzeichniseinrichtung erhaltene Telefonnummern zu wählen, und
eine Einrichtung, um durch Sprachbefehl eine Telefonnummer in der Verzeichniseinrichtung zu speichern, deren Speicherung einen aus der Mehrzahl von Betriebsparametern bildet.

6. Elektronisches Gerät nach einem der vorangehenden Ansprüche, weiter umfassend eine Einrichtung zur Datenerweiterung der Worterkennungsmodelle zur Synthese, um dadurch erweiterte Worterkennungsmodelle zur Verfügung zu stellen, wobei der Syntheseprozessor die erweiterten Worterkennungsmodelle benutzt, um ein Sprachantwortsignal zu synthetisieren.

7. Elektronisches Gerät nach einem der vorangehenden Ansprüche, bei dem das elektronische Gerät ein Funktelefon ist.

8. Elektronisches Gerät nach einem der vorangehenden Ansprüche, bei dem das elektronische Gerät ein Funk-Sende-Empfänger ist, wobei das Steuersystem eine Mehrzahl benutzergesteuerter Betriebsparameter des Funk-Sende-Empfängers auf ein benutzergesprochenes Befehlswort hin steuert und dem Benutzer eine hörbare Rückmeldung bezüglich des Betriebszustandes des Funk-Sende-Empfängers zur Verfügung stellt, wobei der Funk-Sende-Empfänger eine erste Verbindungseinrichtung, um eine akustische Verbindung der benutzergesprochenen Eingabesprache mit der Steuereinrichtung herzustellen, um dadurch ein Eingabesprachsignal zur Verfügung zu stellen, und eine zweite Verbindungseinrichtung umfaßt, um eine akustische Verbindung des Sprachantwortsignals von der Steuereinrichtung mit dem Benutzer herzustellen, um dadurch dem Benutzer eine hörbare Rückmeldung bezüglich des gegenwärtigen Betriebszustandes des Funk-Sende-Empfängers zur Verfügung zu stellen.

9. Verfahren zur Bereitstellung einer benutzerinteraktiven Steuerung der Betriebsparameter eines elektronischen Gerätes bei dem Vorkommen eines benutzergesprochenen Befehlswortes und zum Erzeugen einer hörbaren Rückmeldung bezüglich des Gerätebetriebszustandes für den Benutzer, wobei das Verfahren die Schritte umfaßt:
Extrahieren akustischer Merkmale aus einem benutzergesprochenen Eingabesprachsignal, um dadurch Wortmerkmalsignale zu erzeugen;
Datenreduktion der Wortmerkmalsignale und, wenn vorhanden, Abwerfen der Tonlageinformation, um dadurch in einem Übungsmodus des Gerätes Worterkennungsmodelle zu erzeugen, und Speichern der Worterkennungsmodelle im Speicher (160);
Erkennen benutzergesprochener Befehlswörter in einem Erkennungsmodus als Reaktion auf die gespeicherten Wortmodelle und auf ein benutzergesprochenes Eingabesprachsignal, um Gerätesteuerdaten zu erzeugen;
Steuern der Gerätebetriebsparameter als Reaktion auf die Steuerdaten, und
Synthetisieren einer Antwortsprache für den Benutzer, wobei das Verfahren dadurch gekennzeichnet ist, daß der Schritt der Synthetisierung der Antwortsprache die Antwortsprache aus den gespeicherten Worterkennungsmodellen synthetisiert und die Tonlageinformation gemäß einem vorbestimmten Regelsatz anstelle von und unabhängig von der abgeworfenen Tonlageinformation einsetzt.

**10.** Verfahren nach Anspruch 9, bei dem die Tonlageinformation Tonlagenimpulse mit konstanter mittlerer Leistung und variabler Folgefrequenz umfaßt, deren Folgefrequenzveränderung gemäß dem vorbestimmten Regelsatz bestimmt wird.

**11.** Verfahren nach Anspruch 10, bei dem der Regelsatz eine Regel umfaßt, bei der die variable Folgefrequenz der Tonlagenimpulse eine Funktion der Länge des zu synthetisierenden Wortes ist.

**12.** Verfahren nach Anspruch 9, 10 oder 11, weiter umfassend den Schritt, um durch Sprachbefehl eine Mehrzahl von Telefonnummern zu speichern, deren Speicherung einen aus der Mehrzahl von Betriebsparametern bildet.

**13.** Verfahren nach Anspruch 9, 10, 11 oder 12, bei dem der Schritt zur Datenreduktion die Schritte umfaßt:
Normalisieren der Energiedaten der Wortmerkmalsignale;
Segmentieren der Wortmerkmalsignale;
Vereinigen ausgewählter Segmente, um Segmentgruppen zu bilden, und
differentielles Codieren der Wortmerkmalsignale.

**Revendications**

**1.** Dispositif électronique possédant un système de commande à fonctionnement en mode interactif avec l'utilisateur et à apprentissage donné par l'utilisateur, ledit système commandant une pluralité de paramètres de fonctionnement du dispositif sous commande de l'utilisateur suite à la production d'un mot d'instruction prononcé par l'utilisateur et fournissant un retour sonore à l'utilisateur en ce qui concerne l'état de fonctionnement du dispositif, ledit système de commande comprenant :
un processeur acoustique (110) servant à extraire des particularités acoustiques d'une parole prononcée par l'utilisateur, de manière à produire des signaux de particularités de mot;
un processeur d'apprentissage (170) qui effectue une réduction de données sur les signaux de particularités de mot, en rejetant les informations de hauteurs de son, s'il en existe, de manière à produire des modèles de reconnaissance de mot dans un mode apprentissage dudit dispositif, et qui enregistre lesdits modèles de reconnaissance de mot dans une mémoire (160);
un processeur de reconnaissance (120) qui répond, dans le mode reconnaissance dudit dispositif, auxdits modèles de reconnaissance de mot et à des paroles prononcées par l'utilisateur qui ont été prétraitées par ledit processeur acoustique (110), en reconnaissant des mots d'instruction prononcés par l'utilisateur afin de produire des données de commande du dispositif;
un moyen (130) de commande du dispositif, qui répond auxdites données de commande du dispositif en commandant lesdits paramètres de fonctionnement du dispositif; et
un processeur de synthèse (140) servant à synthétiser les paroles fournies en réponse à l'utilisateur, ledit dispositif étant caractérisé en ce que ledit processeur de synthèse synthétise chaque parole de réponse à partir desdits modèles de reconnaissance de parole, et en ce que ledit processeur de synthèse comporte une source de hauteurs de son qui substitue une information de hauteurs de son (925) à la place de ladite information de hauteurs de son rejetée, et indépendamment de celle-ci, en fonction d'un ensemble de règles prédéterminées.

**2.** Dispositif électronique selon la revendication 1, où l'information de hauteurs de son comprend des impulsions de hauteurs de son à taux variable de puissance moyenne constante, la variation de taux des impulsions étant déterminée en fonction de l'ensemble de règles prédéterminées.

**3.** Dispositif électronique selon la revendication 2, où l'ensemble de règles comporte une règle dans laquelle le taux variable des impulsions de hauteurs de son est une fonction de la longueur du mot à synthétiser.

**4.** Dispositif électronique selon la revendication 3, où la source de hauteurs de son comprend :
une unité (940) de commande de taux des impulsions de hauteurs de son, servant à produire une information de période de hauteurs de son qui représente le taux de variation de la période des impulsions de hauteurs de son à l'aide de la valeur de la longueur du mot à synthétiser et d'une constante prédéterminée qui représente le nombre de trames d'un mot ayant sensiblement la même valeur de hauteurs de son;

un générateur (942) de taux de hauteurs de son, servant à produire un signal de taux de hauteurs de son à des intervalles réguliers en fonction de ladite information de période de hauteurs de son; et

un générateur (944) d'impulsions de hauteurs de son, qui utilise le signal de taux de hauteurs de son pour produire la forme d'onde représentant l'information de hauteurs de son (925) possédant une puissance moyenne constante.

5. Dispositif électronique selon la revendication 1, 2, 3 ou 4, où ledit moyen de commande du dispositif comporte :

un moyen du type annuaire servant à mémoriser une pluralité de numéros de téléphone ;

un moyen d'appel téléphonique servant à former des numéros de téléphone obtenus à partir dudit moyen annuaire en réponse à la reconnaissance d'au moins un mot d'instruction prédéterminé prononcé par l'utilisateur; et

un moyen permettant de mémoriser un numéro de téléphone dans ledit moyen annuaire par commande vocale, cette mémorisation constituant l'un desdits paramètres de fonctionnement.

6. Dispositif électronique selon l'une quelconque des revendications précédentes, comprenant en outre un moyen permettant d'effectuer une expansion, ou dilatation, de données sur lesdits modèles de reconnaissance de mot en vue de la synthèse, ce qui produit des modèles de reconnaissance de mot dilatés, ledit processeur de synthèse utilisant lesdits modèles de reconnaissance de mot dilatés pour synthétiser un signal de réponse sous forme de parole.

7. Dispositif électronique selon l'une quelconque des revendications précédentes, où ledit dispositif électronique est un radiotéléphone.

8. Dispositif électronique selon l'une quelconque des revendications précédentes, où ledit dispositif électronique est un émetteur-récepteur radio, ledit système de commande commandant une pluralité de paramètres de fonctionnement de l'émetteur-récepteur radio sous commande de l'utilisateur suite à un mot d'instruction prononcé par l'utilisateur, et fournissant un retour audible à l'utilisateur en ce qui concerne l'état de fonctionnement de l'émetteur-récepteur radio, ledit émetteur-récepteur radio comprenant un premier moyen de couplage qui réalise un couplage acoustique de la parole d'entrée prononcée par l'utilisateur avec ledit moyen de commande, ce qui produit un signal de parole d'entrée, et un deuxième moyen de couplage qui réalise le couplage acoustique dudit signal de réponse sous forme de parole dudit moyen de commande à l'utilisateur, ce qui fournit un retour audible à l'utilisateur en ce qui concerne l'état présent de fonctionnement de l'émetteur-récepteur radio.

9. Procédé permettant de réaliser la commande, interactive avec l'utilisateur, de paramètres de fonctionnement d'un dispositif électronique suite à la production d'un mot d'instruction prononcé par l'utilisateur, et de créer un retour audible à destination de l'utilisateur en ce qui concerne l'état de fonctionnement du dispositif, ledit procédé comprenant les opérations suivantes :

extraire des particularités acoustiques d'un signal de parole d'entrée prononcé par l'utilisateur, de manière à produire des signaux de particularités de mot;

effectuer une réduction de données sur les signaux de particularités de mot et rejeter l'information de hauteurs de son, s'il en existe, de manière à produire des modèles de reconnaissance de mot dans un mode apprentissage dudit dispositif, et enregistrer lesdits modèles de reconnaissance de mot dans une mémoire (160);

reconnaître, dans un mode reconnaissance, des mots d'instruction prononcés par l'utilisateur en réponse auxdits modèles de mot enregistrés et à un signal de parole d'entrée prononcé par l'utilisateur afin de produire des données de commande du dispositif;

commander les paramètres de fonctionnement du dispositif en réponse auxdites données de commande ; et

synthétiser une parole de réponse à destination de l'utilisateur, le procédé étant caractérisé en ce que ladite opération de synthèse d'une parole de réponse synthétise ladite parole de réponse à partir desdits modèles de reconnaissance de mot enregistrés et substitue une information de hauteurs de son à la place de ladite information de hauteurs de son rejetée, et indépendamment de celle-ci, en fonction d'un ensemble de règles prédéterminées.

**10.** Procédé selon la revendication 9, où l'information de hauteurs de son comprend des impulsions de hauteurs de son à taux variable de puissance moyenne constante, la variation de taux des impulsions étant déterminée en fonction de l'ensemble de règles prédéterminées.

**11.** Procédé selon la revendication 10, où l'ensemble de règles comporte une règle dans laquelle le taux variable des impulsions de hauteurs de son est une fonction de la longueur du mot a synthétiser.

**12.** Procédé selon la revendication 9, 10 ou 11, comprenant en outre l'opération qui consiste à mémoriser une pluralité de numéros de téléphone par commande vocale, cette mémorisation constituant l'un desdits paramètres de fonctionnement.

**13.** Procédé selon la revendication 9, 10, 11 ou 12, où ladite opération de réduction de données comprenant les opérations suivantes :
normaliser les données d'énergie des signaux de particularités de mot
segmenter les signaux de particularités de mot
combiner des segments sélectionnés de façon à former des groupements de segments ; et
appliquer un codage différentiel aux signaux de particularités de mot.

EP 0 255 523 B1

*Fig. 1*

*Fig. 2*

200

EP 0 255 523 B1

Fig. 3

*Fig. 4a*

EP 0 255 523 B1

*Fig. 4b*

410

```
                    START  ⟋440
                      │
                      ▼
          ┌───────────────────────┐ ⟋441
          │     INITIALIZATION     │
          │  FC = 1      CT = 14   │
          └───────────────────────┘
                      │
                      ▼
          ┌───────────────────────┐ ⟋442
          │ CALCULATE FRAME TOTAL (FT) │
          └───────────────────────┘
                      │
          ┌──────────►│
          │           ▼
          │      ╱─────────╲ ⟋443
          │     ╱           ╲      YES
          │    ╱   FC>FT      ╲──────────────┐
          │    ╲     ?        ╱               │
          │     ╲           ╱                 ▼
          │      ╲─────────╱              END  ⟋444
          │           │ NO
          │           ▼
          │  ┌───────────────────────┐ ⟋445
          │  │ CALCULATE AVG FRAME ENERGY │
          │  │        (AVGENG)        │
          │  └───────────────────────┘
          │           │
          │           ▼
          │  ┌───────────────────────┐ ⟋446
          │  │  OUTPUT AVG FRAME ENERGY │
          │  └───────────────────────┘
          │           │
          │           ▼
          │  ┌───────────────────────┐ ⟋447
          │  │        CC = 1          │
          │  └───────────────────────┘
          │           │
          │           ▼◄──────────────────┐
          │  ┌───────────────────────┐ ⟋448 │
          │  │   READ CH(CC) ENERGY   │     │
          │  └───────────────────────┘     │
          │           │                    │
          │           ▼                    │
          │  ┌───────────────────────┐ ⟋449 │
          │  │ CH(CC) DATA = CH(CC) ENG │   │
          │  │        -AVGENG         │     │
          │  └───────────────────────┘     │
          │           │                    │
          │           ▼                    │
          │  ┌───────────────────────┐ ⟋450 │
          │  │   OUTPUT CH(CC) DATA   │     │
          │  └───────────────────────┘     │
          │           │                    │
          │           ▼                    │
          │  ┌───────────────────────┐ ⟋451 │
          │  │       CC = CC + 1      │     │
          │  └───────────────────────┘     │
          │           │                    │
          │           ▼                    │
          │      ╱─────────╲ ⟋452           │
          │     ╱           ╲      NO        │
          │    ╱   CC > CT    ╲──────────────┘
          │    ╲     ?        ╱
          │     ╲           ╱
          │      ╲─────────╱
          │           │ YES
          │           ▼
          │  ┌───────────────────────┐ ⟋453
          │  │       FC = FC + 1      │
          │  └───────────────────────┘
          │           │
          └───────────┘
```

EP 0 255 523 B1

## Fig. 4c

FEATURE DATA → ENERGY NORMALIZATION (410) → INITIAL FRAMES MEMORY (502)

SEGMENTATION CONTROLLER (504) → FRAME AVERAGER (508) → DISTORTION CALCULATOR (508)

(420)

DIFFERENTIAL ENCODING (430)

REDUCED FEATURE DATA

## Fig. 5a

FEATURE DATA IN FRAMES 510

① ② ③ ④ ⑤ ⑥ ⑦

CLUSTER 512

D1 D2 D3 D4 D5

AVERAGE FRAME 514

EP 0 255 523 B1

Y1: ①—520  Y1 = Yo + C0,1  𝓕𝒾𝑔. 5𝑏

Y2: ①② —522 OR ①② —524  Y2 = MIN { Yo+C0,2j Y1+C1,2 }

Y3: ①②③ —526 OR ①②③ —528 OR ①②③ —530  Y3 = MIN { Yo+C0,3j Y1+C1,3j Y2+C2,3 }
①②③ —532

Y4: ①②③④ —534 OR ①②③④ —536 OR ①②③④ —538 OR ①②③④ —542
①②③④ —540  ①②③④ —544
①②③④ —546
①②③④ —548

Y4 = MIN { Yo+C0,4;
Y1+C1,4;
Y2+C2,4;
Y3+C3,4 }

Fig. 5c

START

INITIALIZE
COST(0) ← 0    TBP(0) ← 0
TPD(0) ← 0

550

j ← 1

552

A

*Fig. 5d*

Fig. 5e

FROM 570

582

590

TB ⟸ TB $_{PNTR}$ (LAST FRAME)
CF ⟸ LAST FRAME

592

AVERAGE FRAMES TB+1
THRU CF, GENERATE
REPEAT COUNT=CF−TB, AND
GENERATE AN OUTPUT FRAME

594

TB = 0
?

YES → TO 584

NO

596

CF ⟸ TB
TB ⟸ TB $_{PNTR}$ (CF)

*Fig. 5f*

45

TRACKBACK POINTERS

| FRAME No. | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|---|---|---|---|---|---|---|---|---|---|---|---|---|---|---|---|---|
| POINTER | NULL | – | 0 | 0 | 0 | 1 | 3 | 4 | 5 | 7 | 8 | 10 | 9 | 10 | 12 | 14 | 15 | 16 | 19 | 17 | 18 | 20 | | | |

Fig. 5g

FRAME CONNECTION TREE

```
                        18 — 23
              14 — 17 — 22
0 — 4 — 7 — 10
              12 — 15 — 19 — 21
                        16 — 20 — 24
```

Fig. 5h

OUTPUT COMBINATIONS

```
1 — 4
5 — 7
8 — 10
```

```
                        18 — 23
              14 — 17 — 22
          10
              12 — 15 — 19 — 21
                        16 — 20 — 24
```

Fig. 5i

*Fig. 6a*

430

```
                              ┌─────────┐
                              │  START  │ 660
                              └────┬────┘
                                   ↓
                        ┌──────────────────────┐
                        │    INITIALIZATION     │ 661
                        │   FC = 1    CT = 14   │
                        └──────────┬───────────┘
                                   ↓
                        ┌──────────────────────┐
                        │ CALCULATE FRAME TOTAL (FT) │ 662
                        └──────────┬───────────┘
                                   ↓
                              ◇ 683
                            FC>FT      YES
                              ?      ──────→  ┌─────┐
                             NO               │ END │ 664
                                              └─────┘
                              ↓
                        ┌──────────────────────┐
                        │       CC = 1         │ 665
                        └──────────┬───────────┘
                                   ↓
                        ┌──────────────────────┐
                        │  READ CHANNEL 1 DATA  │ 666
                        └──────────┬───────────┘
                                   ↓
                        ┌──────────────────────┐
                        │ QUANTIZE CHANNEL 1 DATA │ 667
                        └──────────┬───────────┘
                                   ↓
                        ┌──────────────────────┐
                        │  FORM CHANNEL 1 RQV   │ 668
                        └──────────┬───────────┘
                                   ↓
                        ┌──────────────────────┐
                        │ OUTPUT CHANNEL 1 DATA │ 669
                        └──────────┬───────────┘
                                   ↓
                        ┌──────────────────────┐
                        │     CC = CC + 1      │ 670
                        └──────────┬───────────┘
                                   ↓
                        ┌──────────────────────┐
                        │ READ CHANNEL (CC) DATA │ 671
                        └──────────┬───────────┘
                                   ↓
                        ┌──────────────────────┐
                        │ QUANTIZE CHANNEL(CC) DATA │ 672
                        └──────────┬───────────┘
                                   ↓
                        ┌──────────────────────┐
                        │ CHANNEL (CC) DIFF. =  │ 673
                        │ CH(CC) DATA – CH(CC–1) RQV │
                        └──────────┬───────────┘
                                   ↓
                        ┌──────────────────────┐
                        │ LIMIT CHANNEL(CC) DIFF. │ 674
                        └──────────┬───────────┘
                                   ↓
```

A          B          C

*Fig. 6b*

REDUCED DATA FORMAT

*Fig. 6c*

| BYTE | | |
|---|---|---|
| 1 | REPEAT COUNT | |
| 2 | CHANNEL 1 DATA | |
| 3 | Δ 2 | Δ 3 |
| 4 | Δ 4 | Δ 5 |
| 5 | Δ 6 | Δ 7 |
| 6 | Δ 8 | Δ 9 |
| 7 | Δ 10 | Δ 11 |
| 8 | Δ 12 | Δ 13 |
| 9 | Δ 14 | AVGENG |

EACH FRAME

Fig. 7a

*Fig. 7b*

FLOWCHART FOR WORD MODEL DECODER

```
                                                    ┌─ 740
                                    ┌──────────────────────────────┐
                                    │   GET PREVIOUS ACCUMULATED   │
                                    │ DISTANCE, (PCAD AND PAD), AND │
                                    │         TEMPLATE PTR          │
                                    │    FROM RECOGNIZER CONTROL    │
                                    └──────────────────────────────┘
                                                    │
                          ┌─────────────────────────┤
                          │                          ▼         ┌─ 742
                          │                 ┌──────────────────────────┐
                          │                 │      STATE DECODER        │
              ┌─ 746      │                 └──────────────────────────┘
    ┌──────────────────┐  │                          │
    │ UPDATE TEMPLATE  │  │                          ▼         ┌─ 744
    │       PTR        │  │                       ╱FINISH ╲
    └──────────────────┘  │              NO     ╱ DECODING  ╲
              ▲           └─────────────────────  WORD MODEL
              │                                  ╲    ?     ╱
              └──────────────────────────────────╲        ╱
                                                    │ YES
                                                    ▼         ┌─ 748
                                    ┌──────────────────────────────┐
                                    │   RETURN NEW PCAD AND PAD     │
                                    │    TO RECONIZER CONTROL       │
                                    └──────────────────────────────┘
```

*Fig. 7c*

51

STATE DECODER FLOWCHART

FROM 740

COMPUTE DISTANCE FOR WORD
MODEL STATE AND STORE IN IFD — 750

GET MAXDWELL
FROM TEMPLATE MEMORY — 751

MINDWELL=
⌊MAXDWELL/4⌋ — 752

INITIALIZE SUBSTATE POINTER
i = MAXDWELL — 754

COMPUTE INTERIM DISTANCE
TAD = IFD+IFAD(i) — 756

DECREMENT SUBSTATE POINTER
i = i−1 — 758

ALL
SUBSTATES
PROCESSED,
i = 0
? — 760

NO

YES

A

COMPUTE NEW ACCUMULATED
DISTANCE FOR CURRENT SUBSTATE
IFAD(i+1) = IFAD(i) + IFD — 762

CAN
STATE BE EXITED
i ≥ MINDWELL
? — 764

NO

YES

UPDATE INTERIM DISTANCE
TAD=MIN(TAD, IFAD(i+1)) — 768

*Fig. 7d*

742

Fig. 7e

REDUCED WORD DATA → DIFFERENTIAL DECODING (802) → ENERGY DENORMALIZATION (804) → FRAME REPEATING (806) → SYNTHESIZER WORD DATA

346

*Fig. 8a*

**Fig. 8b**

802

START — 810

INITIALIZATION
FC=1          CT=14 — 811

CALCULATE FRAME TOTAL (FT) — 812

FC>FT ? — 813
YES → END — 814
NO

CC = 1 — 815

READ CHANNEL 1 DATA — 816

OUTPUT CHANNEL 1 DATA — 817

CC = CC + 1 — 818

READ CHANNEL (CC) DIFF. — 819

CHANNEL (CC) DATA =
CH(CC−1) DATA+CH(CC) DIFF. — 820

OUTPUT CHANNEL (CC) DATA — 821

CC = CT ? — 822
NO

YES

FC = FC + 1 — 823

START — 825

INITIALIZATION
FC = 1    CT = 14 — 826

CALCULATE FRAME TOTAL (FT) — 827

FC>FT
? — 828

YES → END — 829

NO

READ AVG FRAME ENERGY
(AVGENG) — 830

CC = 1 — 831

READ CH(CC) DATA — 832

CH(CC) ENG = CH(CC) DATA
+ AVGENG — 833

OUTPUT CH(CC) ENG — 834

CC = CC+1 — 835

CC > CT
? — 836

NO

YES

FC = FC + 1 — 837

804

*Fig. 8c*

56

Fig. 8d

806

**Fig. 9a**

340

Fig. 9b

Fig. 9c

Fig. 9d